# EUROPEAN PATENT SPECIFICATION

(11) **EP 2 253 915 B1**
(45) Date of publication and mention of the grant of the patent: **27.06.2018**
(21) Application number: 09723188.0
(22) Date of filing: 17.03.2009
(51) Int. Cl.: B01D 53/047, B01D 53/62, B01D 53/82, F27D 17/00, C10K 1/08, C10K 1/32, C21B 5/06

(54) **METHOD AND APPARATUS FOR SEPARATING BLAST FURNACE GAS**
VERFAHREN UND VORRICHTUNG ZUR TRENNUNG EINES HOCHOFENGASES
PROCÉDÉ ET APPAREIL POUR LA SÉPARATION DE GAZ DE HAUT FOURNEAU

(30) Priority: 18.03.2008 JP 2008070225; 19.03.2008 JP 2008071820; 19.03.2008 JP 2008071819
(43) Date of publication of application: 24.11.2010
(73) Proprietor: JFE Steel Corporation, Tokyo, 100-0011 (JP); Sumitomo Seika Chemicals Co., Ltd., Kako-gun, Hyogo 675-0145 (JP)
(72) Inventor: NAKAGAWA, Tsuguhiko, Kawasaki-shi Kanagawa 210-0855 (JP); MOGI, Yasuhiro, Kawasaki-shi Kanagawa 210-0855 (JP); HARAOKA, Takashi, Kawasaki-shi Kanagawa 210-0855 (JP); KISHIMOTO, Akira, Kawasaki-shi Kanagawa 210-0855 (JP); SAIMA, Hitoshi, Kawasaki-shi Kanagawa 210-0855 (JP); SAKAI, Itaru, Kawasaki-shi Kanagawa 210-0855 (JP); MIYAKE, Masanori, Kako-gun Hyogo 675-0145 (JP); TAKATA, Yoshinori, Kako-gun Hyogo 675-0145 (JP); SUMIDA, Toshihiko, Kako-gun Hyogo 675-0145 (JP)
(74) Representative: Hoffmann Eitle
(86) International application number: PCT/JP2009/055718
(87) International publication number: WO 2009/116671

(56) References cited:
- JP-A- S6 246 911
- JP-A- 53 058 991
- JP-A- 2007 182 350
- JP-A- 2007 261 824
- US-A- 5 096 470

## Description

### FIELD OF THE INVENTION

The present invention relates to a method and an apparatus for separating a blast furnace gas discharged from a blast furnace.

### DESCRIPTION OF THE RELATED ARTS

In steelworks, gases called by-product gases are generated from facilities such as coke furnaces, blast furnaces, converters, etc. Most of the by-product gases are used in processes that utilize heat generated by combustion, such as in power plants and heating furnaces. However, since inert components such as nitrogen and carbon dioxide are contained in addition to the components, such as hydrogen, carbon monoxide, and methane, that can be used as fuels, there is a problem that the heating value per unit volume is as low as 700 to 4500 kcal/Nm³ compared to commonly used fuel gases such as propane gas and natural gas. In particular, the unit heating value of the blast furnace gas is about 700 kcal/Nm³, which is one of the lowest among the heating values of the by-product gases.

This is because blast furnace gas contains little fuel components such as hydrogen, carbon monoxide, and methane and the heat generated by the combustion of these fuel components is used to increase the temperatures of the inert components, i.e., nitrogen and carbon dioxide. The nitrogen content in the blast furnace gas is about 52 to 60 percent by volume and the carbon dioxide content is about 19 to 24 percent by volume.

Recently, reduction of carbon dioxide emission is strongly desired to protect global environment and separation and recovery of carbon dioxide from blast furnace gas have become a major issue.

Thus, a number of proposals have been made on methods for removing these inert components.

Japanese Unexamined Patent Application Publication No. 61-28446 proposes a method for recovering inert gas mainly composed of nitrogen and carbon dioxide, by which, after carbon monoxide is removed from gas containing carbon monoxide and carbon dioxide, the gas is burned in the presence of a combustion catalyst to remove trace amounts of remaining fuel gas and oxygen. Also proposed is a method for obtaining high-purity nitrogen by separating carbon dioxide from this inert gas.

Japanese Unexamined Patent Application Publication No. 62-193622 proposes a pressure swing adsorption separation technique by which gas containing relatively large amounts of carbon monoxide and hydrogen can be obtained by charging an alumina-based adsorbent that adsorbs carbon dioxide in blast furnace gas and porous polystyrene that adsorbs nitrogen in a adsorption tower and increasing and decreasing the pressure inside the adsorption tower.

Japanese Unexamined Patent Application Publication No. 2004-292298 proposes a method for separating carbon dioxide by allowing a chemical liquid absorbent to absorb carbon dioxide from by-product gas such as blast furnace gas and heating the chemical liquid absorbent.

However, these related technologies described above face following challenges and are not put to practical use.

According to the method of Japanese Unexamined Patent Application Publication No. 61-28446, gas generated by separating carbon monoxide from blast furnace gas still contains about 1% of carbon monoxide and substantially all of hydrogen. Since they are not gases that have a enough heating value to be used as fuels, they are completely combusted in a combustor provided at the downstream of the separator and discarded. However, the heating value is equivalent to 5% of the total heating value of the blast furnace gas. Thus, it has been desired to improve the separation ratio of carbon monoxide, also separate hydrogen, and reduce the amounts of carbon monoxide and hydrogen remaining in the gas after separation.

According to the method of Japanese Unexamined Patent Application Publication No. 62-193622, the separation ratio of carbon monoxide and hydrogen does not exceed 80%, and gases that contain the rest 20% of carbon monoxide and hydrogen also contain large quantities of carbon dioxide and nitrogen and have not been used since a large heating value cannot be obtained by combustion.

According to the method of Japanese Unexamined Patent Application Publication No. 2004-292298, only carbon dioxide, the concentration of which is about 20% in blast furnace gas, is separated and the gas remaining after the separation still contains large quantities of nitrogen. Thus, the improvement of the heating value by combustion was only about 25%.

Moreover, all of the methods have a problem that large quantities of energy is needed for separation operation. The method disclosed in Japanese Unexamined Patent Application Publication No. 61-28446 requires energy for heating the liquid absorbent to 100°C to 150°C or reducing the pressure in the container containing the liquid absorbent to regenerate the liquid absorbent; the method disclosed in Japanese Unexamined Patent Application Publication No. 62-193622 requires energy for increasing the pressure in the adsorption tower to 2 atm during adsorption of carbon monoxide and hydrogen and decreasing the pressure to 0.1 atm during desorption of carbon monoxide and hydrogen adsorbed; and the method disclosed in Japanese Unexamined Patent Application Publication No. 2004-292298 requires energy for regenerating the liquid absorbent by heating the liquid absorbent to 120°C. These energies have sometimes been covered by re-using the waste heat generated in ironworks, but this has not been sufficient.

Separating the inert components such as carbon dioxide and nitrogen from by-product gas generated in ironworks and reusing the gas remaining after separation as fuel gas by increasing the heating value of the gas are important not only from the viewpoints of contribution to energy conservation but also from the viewpoints of reducing the carbon dioxide emission. However, in order to put such technologies to practical use, challenges such as improving recovery ratios of carbon monoxide and hydrogen serving as fuel components and the cost such as reducing the amount of energy needed for separation operation remain.

Japanese Unexamined Patent Application Publication No. 9-47634 discloses a method for recovering carbon dioxide by a chemical absorption technique using an amine. However, according to the chemical absorption technique, nitrogen which accounts for the largest ratio in non-combustible gas remains unremoved and thus a drastic increase in calorific value of treated gas is not to be expected. Since nitrogen is inert gas with poor reactivity, it is basically difficult to separate nitrogen through a chemical treatment; thus, other separation techniques must be considered.

An example of a technique for separating gas by using physical adsorption is a pressure swing adsorption (PSA) gas separation technique. The PSA technique is a technique for concentrating and separating an object gas by utilizing the fact that the adsorbability relative to the adsorbent differs between different types of gas. According to gas separation by the PSA technique, a PSA gas separator equipped with an adsorption tower charged with an adsorbent for preferentially adsorbing particular components is used and an adsorption step and a desorption step are at least performed in the adsorption tower. In the adsorption step, a mixed gas is introduced into the adsorption tower to allow easily adsorbable components in the mixed gas to adsorb onto the adsorbent under a high pressure condition and an unadsorbed gas containing concentrated poorly adsorbable components is discharged from the adsorption tower. In the desorption step, the pressure in the tower is decreased to desorb the easily adsorbable components from the adsorbent to discharge desorption gas mainly containing the easily adsorbable components from the adsorption tower.

According to the PSA technique, in general, the gas to be obtained is either a poorly adsorbable component or a easily adsorbable component; and it is considered difficult to obtain two or more types of gas respectively at high concentration ratios and high recovery ratios. For example, in order to increase the concentration ratio and the recovery ratio for the poorly adsorbable component, the adsorption step must be ended before breakdown of the adsorbent starts; however, adsorption of the easily adsorbable components onto the adsorbent is not sufficient at this point of time. Accordingly, in such a case, even when a desorbed gas is recovered to acquire easily adsorbable components, the concentration ratios and recovery ratios of the easily adsorbable components are relatively low. In order to increase the concentration ratios and recovery ratios of the easily adsorbable components, the adsorption step must be continued until the breakthrough of the adsorbent is sufficiently reached; thus, the unadsorbed gas discharged from the adsorption tower immediately before end of the adsorption step has a composition close to that of the original mixed gas. Accordingly, in such a case, even when an unadsorbed gas is recovered to acquire poorly adsorbable components, the concentration ratios of the poorly adsorbable components are relatively low. When carbon dioxide is to be separated and obtained by the PSA technique, in general, an adsorbent that has a large adsorption capacity for carbon dioxide is used. For example, activated carbon is suited for the use. It is known that the adsorbability of hydrogen to activated carbon is significantly small compared to that of carbon dioxide; thus, when activated carbon is used as the adsorbent, carbon dioxide serves as a easily adsorbable component and hydrogen serves as a poorly adsorbable component. JP 2007 261824 A discloses a concept for separating blast furnace gas containing carbon dioxide, nitrogen, hydrogen, and carbon monoxide using the PSA technique with two consecutive adsorption units. Accordingly, increasing the concentration ratio and recovery ratio of carbon dioxide will lead to decreasing the concentration ratio of hydrogen due to the reasons described above. As mentioned above, it has been difficult to independently concentrate and separate two or more target gases by one-stage PSA operation. In particular, when the object to be separated is blast furnace gas with carbon dioxide and hydrogen serving as target gases, it has been particularly more difficult to concentrate and recover hydrogen while concentrating and separating carbon dioxide since the hydrogen concentration is as low as 2% to 6%.

### SUMMARY OF THE INVENTION

It is an object of the present invention to provide a furnace gas separation method and an apparatus therefor by which carbon monoxide and hydrogen can be efficiently recovered from blast furnace gas and fuel gas having a sufficiently high heating value to be reused as a heat source can be obtained at low cost.

To achieve the object, the present invention provides a method and an apparatus for separating a blast furnace gas as defined in claims 1 and 2.

### BRIEF DESCRIPTION OF THE DRAWINGS

Fig. 1 is a process chart showing a method for separating a blast furnace gas according to a first embodiment;
Fig. 2 is a schematic illustration of a separation operation in which pressure swing adsorption apparatuses are used in gas separation steps of a first stage and a second stage;
Fig. 3 is a schematic diagram showing a separation operation of a gas containing hydrogen and an unavoidable impurity gas component when a hydrogen separator is a separator by adsorption in the first embodiment shown in Fig. 2;
Fig. 4A is a schematic diagram showing a deaeration operation by reducing pressure when a hydrogen separator is a separator by adsorption in the first embodiment shown in Fig. 2;
Fig. 4B is a schematic diagram of a washing operation with a gas containing hydrogen and an unavoidable impurity gas component when a hydrogen separator is a separator by adsorption in the first embodiment shown in Fig. 2;
Fig. 4C is a schematic diagram of a reverse washing operation with a gas containing hydrogen and an unavoidable impurity gas component when a hydrogen separator is a separator by adsorption in the first embodiment shown in Fig. 2;
Fig. 5 is a schematic structural diagram of a blast furnace gas separation system that can be used to carry out a method for separating a blast furnace gas according to a second embodiment;
Fig. 6 is a graph showing adsorption isotherms of activated carbon for various gases;
Fig. 7 is a graph showing adsorption isotherms of activated carbon impregnated with copper chloride;
Fig. 8 is a schematic structural diagram of an example of an apparatus for separating a blast furnace gas that can be used in carryout a method for separating a blast furnace gas according to a third embodiment;
Fig. 9 includes flow diagrams of gases corresponding to the steps of the method for separating a blast furnace gas according to the third embodiment;
Fig. 10 is a graph showing adsorption isotherms of activated carbon for various cases;
Fig. 11 is a graph showing an example of changed over time in hydrogen concentration in an adsorbed gas during an adsorption step; and
Fig. 12 is schematic structural diagram of another example of an apparatus for separating a blast furnace gas that can be used for carrying out the method for separating a blast furnace gas according to the third embodiment.

### EMBODIMENTS FOR CARRYING OUT THE INVENTION

### FIRST EMBODIMENT (NOT PART OF THE PRESENT INVENTION)

The inventors have conducted extensive studies to improve the separation and recovery ratios and reduce the cost and energy required for separation and recovery in separating and recovering blast furnace gas, and have found that what is important is which components among nitrogen, carbon monoxide, carbon dioxide, and hydrogen in blast furnace gas should be combined in separating gas containing that combination and in which order gases containing various components should be separated.

A first embodiment is based on the above-described finding and can be summarized as follows.
**1.** A method for separating a blast furnace gas discharged from a blast furnace by using gas separation and refinement apparatuses of two stages into gases containing various components, the method comprising:
   separating a blast furnace gas with a gas separation and refinement apparatus of a first stage into
      a gas containing hydrogen, nitrogen, and an unavoidable impurity gas component,
      a gas containing nitrogen and an unavoidable impurity gas component,
      a gas containing nitrogen, carbon monoxide, carbon dioxide, and an unavoidable impurity gas component, and
      a gas containing carbon monoxide, carbon dioxide, and an unavoidable impurity gas component; and
   then separating the gas containing carbon monoxide, carbon dioxide, and the unavoidable impurity gas component among these separated gases with a gas separation and refinement apparatus of a second stage into
      a gas containing carbon monoxide and an unavoidable impurity gas component,
      a gas containing carbon dioxide and an unavoidable impurity gas component, and
      a gas containing carbon monoxide, carbon dioxide, and an unavoidable impurity gas component.
**2.** The method for separating a blast furnace gas according to 1 above, wherein the gas separation and refinement apparatus of the first stage is an adsorption separator filled with a substance that adsorbs carbon monoxide and carbon dioxide among nitrogen, carbon monoxide, carbon dioxide, and hydrogen which are components contained in the blast furnace gas, and the gas separation and refinement apparatus of the second stage is an adsorption separator filled with a substance that adsorbs carbon dioxide among the components contained in the blast furnace gas.
**3.** The method for separating a blast furnace gas according to 1 above, wherein the gas separation and refinement apparatus of the first stage is an adsorption separator filled with a substance that adsorbs carbon monoxide and carbon dioxide among nitrogen, carbon monoxide, carbon dioxide, and hydrogen which are components contained in the blast furnace gas, and the gas separation and refinement apparatus of the second stage is a chemical absorber that separates carbon dioxide by absorption.
4. The method for separating a blast furnace gas according to any one of 1 to 3 above, wherein the gas containing hydrogen, nitrogen, and the unavoidable impurity gas component separated with the gas separation and refinement apparatus of the first stage is introduced into a gas separation and refinement apparatus of a third stage in which a hydrogen permeable film or an adsorbent that adsorbs components other than hydrogen is disposed, and the gas containing nitrogen, hydrogen, and the unavoidable impurity gas component is separated into a gas containing hydrogen and an unavoidable impurity gas component and a gas containing nitrogen and an unavoidable impurity gas component.
**5.** The method for separating a blast furnace gas according to 4 above, wherein, in separating the gas containing hydrogen and the unavoidable impurity gas component from the gas containing hydrogen, nitrogen, and the unavoidable impurity gas component with the adsorbent that adsorbs components other than hydrogen,
   the adsorbent that had adsorbed components other than hydrogen is subjected to a desorption treatment by
   a deaeration operation of reducing pressure inside the gas separation and refinement apparatus of the third stage,
   a washing operation using hydrogen from an inlet side of the gas separation and refinement apparatus of the third stage, or
   a reverse washing operation using hydrogen from an outlet side of the gas separation and refinement apparatus of the third stage.
**6.** The method for separating a blast furnace gas according to any one of 1 to 5 above, wherein the gas containing nitrogen, carbon monoxide, carbon dioxide, and the unavoidable impurity gas component separated with the gas separation and refinement apparatus of the first stage is again fed to the gas separation and refinement apparatus of the first stage.
**7.** The method for separating a blast furnace gas according to 6 above, wherein, from the gas containing nitrogen, carbon monoxide, carbon dioxide, and the unavoidable impurity gas component separated with the gas separation and refinement apparatus of the first stage, a gas having a nitrogen content of 40 vol% or less of the entire gas is recovered as a fuel gas for ironworks.
**8.** The method for separating a blast furnace gas according to any one of 1 to 7 above, wherein the gas containing nitrogen and the unavoidable impurity gas component separated with the gas separation and refinement apparatus of the first stage is again fed to the gas separation and refinement apparatus of the first stage.

According to the first embodiment, highly concentrated carbon monoxide can be efficiently separated from a blast furnace gas and part of a gas separated as an intermediate product and containing nitrogen, carbon monoxide, and carbon dioxide can be used as a fuel gas in ironworks since the nitrogen content is low. Moreover, since carbon dioxide can also be separated efficiently, recovery of carbon dioxide can lead to reduction of emission. Furthermore, highly concentrated hydrogen can be recovered and can be reused by being mixed with a fuel gas so as to improve the heating value of the fuel gas.

The first embodiment will now be described in specific detail.

The composition of the blast furnace gas is 21.1 to 26.2 vol% carbon monoxide, 19.3 to 23.2 vol% carbon dioxide, 2.9 to 5.3 vol% hydrogen, and 52.5 to 59.2 vol% nitrogen. (Refer to Handbook of Steel and Iron, 4th edition (CD-ROM), No. 1, vol. 2, Pig iron and steel making, published July 30, 2002, Table 42-5·7 (2000)) In order to obtain a gas having a heating value that can be used as a fuel from such a blast furnace gas, two stages of gas separation and refinement apparatuses are used in this embodiment. The gas separation and refinement apparatus of the first stage separates the blast furnace gas into four types of gases, namely, a gas containing hydrogen, nitrogen, and an unavoidable impurity gas component, a gas containing nitrogen and an unavoidable impurity gas component, a gas containing nitrogen, carbon monoxide, carbon dioxide, and an unavoidable impurity gas component, and a gas containing carbon monoxide, carbon dioxide, and an unavoidable impurity gas component. The "unavoidable impurity gas component" includes minor components contained in the blast furnace gas as well as gas components that are incidentally mixed for the sake of separation efficiency other than the components to be separated selected from the four components (carbon monoxide, carbon dioxide, hydrogen, and nitrogen) described above, and about 20 vol% of such components are contained at maximum.

In the first embodiment, since the gas containing carbon dioxide, carbon monoxide, and the unavoidable impurity gas component is first separated from the blast furnace gas by using the gas separation and refinement apparatus of the first stage, the energy required by the gas separation and refinement apparatus of the second stage for separating carbon dioxide and carbon monoxide can be decreased, thereby enabling efficient separation.

An adsorption separator in which a substance that mainly adsorbs carbon monoxide and carbon dioxide is disposed can be used as the gas separation and refinement apparatus of the first stage. An adsorption separator in which a substance that mainly adsorbs carbon dioxide is disposed or a chemical absorber that allows a liquid absorbent to absorb carbon dioxide can be used as the gas separation and refinement apparatus of the second stage.

An adsorption separator that employs a pressure swing adsorption technique (PSA technique) or a temperature swing adsorption technique (TSA technique) can be used as the adsorption separator used as the gas separation and refinement apparatuses of the first and second stages.

A chemical absorber that uses an amine or a chilled ammonia as a liquid absorbent can be used as the gas separation and refinement apparatus of the second stage.

Among the gas separated with the gas separation and refinement apparatus of the first stage at the outlet side of the gas separation and refinement apparatus of the first stage, a gas containing nitrogen, hydrogen and an unavoidable impurity gas component is introduced to the gas separation and refinement apparatus of the third stage in which a hydrogen permeable film or an adsorbent that adsorbs components other than hydrogen is disposed so that a gas containing hydrogen and an unavoidable impurity gas component can be obtained.

The first embodiment will now be described in specific detail with reference to the drawings.

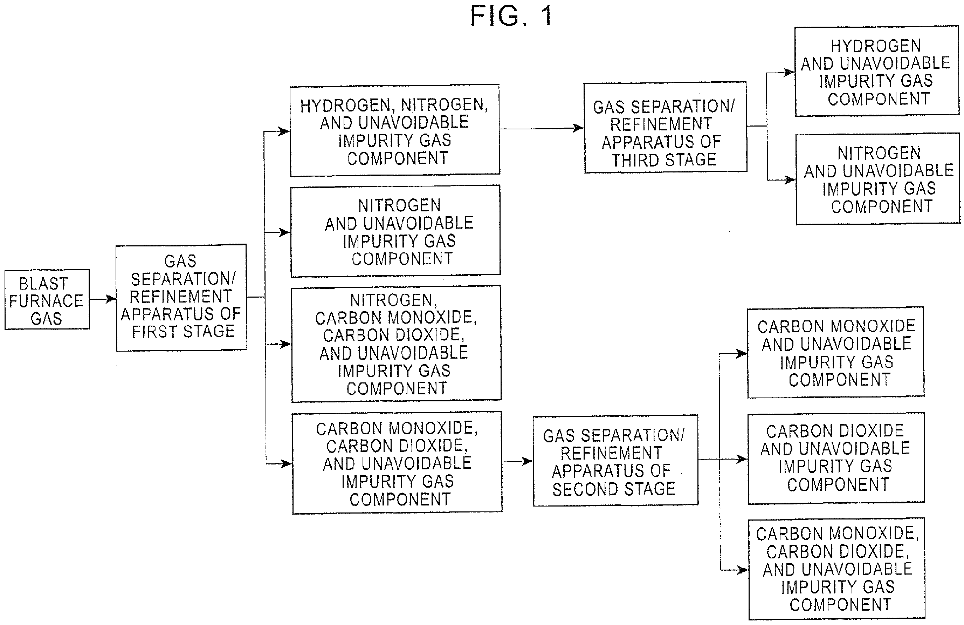

Fig. 1 is a process chart showing an example of the first embodiment.

First, the gas separation and refinement apparatus of the first stage separates a blast furnace gas into a gas containing hydrogen, nitrogen, and an unavoidable impurity gas component, a gas containing nitrogen and an unavoidable impurity gas component, a gas containing nitrogen, carbon monoxide, carbon dioxide, and an unavoidable impurity gas component, and a gas containing carbon monoxide, carbon dioxide, and an unavoidable impurity gas component. This is because when the separation and refinement process that requires pressure and heating is conducted at the first stage, the pressure and temperature of the blast furnace gas obtained form the blast furnace top can be directly used and therefore separation of the blast furnace gas can be conducted with less energy, as described below.

The composition of the gas containing hydrogen, nitrogen, and the unavoidable impurity gas component is about 5 to 50 vol% hydrogen and about 50 to 90 vol% nitrogen; the composition of the gas containing nitrogen and the unavoidable impurity gas component is 80 to 90 vol% or more nitrogen; the gas containing nitrogen, carbon monoxide, carbon dioxide, and the unavoidable impurity gas component is about 1 to 90 vol% nitrogen, about 5 to 60 vol% carbon monoxide, and about 1 to 50 vol% carbon dioxide; and the composition of the gas containing carbon monoxide, carbon dioxide, and the unavoidable impurity gas component is about 30 to 50 vol% carbon monoxide and about 50 to 70 vol% carbon dioxide.

Among the four types of gases separated with the gas separation and refinement apparatus of the first stage, the gas containing carbon monoxide, carbon dioxide, and the unavoidable impurity gas component is further introduced into a gas separation and refinement apparatus of a second stage and separated into a gas containing carbon monoxide and an unavoidable impurity gas component and a gas containing carbon dioxide and an unavoidable impurity gas component. In the course of separation, a gas containing carbon monoxide, carbon dioxide, and an unavoidable impurity gas component (a gas in which carbon monoxide and carbon dioxide which could not be separated are mixed) is generated. Usually, a gas in such a state is returned to the gas separation and refinement apparatus of the second stage but can be effectively used as described below. Each of the gases will now be described.

The composition of the gas containing carbon monoxide and the unavoidable impurity gas component is about 85 to 99 vol% carbon monoxide. Since the carbon monoxide concentration is high, the gas can be used as a fuel gas in ironworks or a chemical raw material.

The composition of the gas containing carbon dioxide and the unavoidable impurity gas component is about 80 to 99 vol% carbon dioxide.

The composition of the gas containing carbon monoxide, carbon dioxide, and the unavoidable impurity gas component is about 85 to 50 vol% carbon monoxide and 15 to 50 vol% carbon dioxide.

The gas containing carbon dioxide, carbon monoxide, and the unavoidable impurity gas component introduced into the gas separation and refinement apparatus of the second stage has a higher carbon dioxide concentration than the blast furnace gas; thus, large quantities of energy is not needed for gas separation and refinement at the second stage, and carbon dioxide and carbon monoxide can be separated at high separation ratios.

Described above is the basic feature of the method for separating a blast furnace gas according to the first embodiment; alternatively, a hydrogen separator may be provided as a gas separation and refinement apparatus of a third stage and the gas containing hydrogen, nitrogen, and the unavoidable impurity gas component among the four types of gases separated with the gas separation and refinement apparatus of the first stage may be separated into a gas containing hydrogen and an unavoidable impurity gas component and a gas containing nitrogen and an unavoidable impurity gas component. Note that the hydrogen concentration in the gas containing hydrogen and the unavoidable impurity gas component is within the range of about 50 to 99 vol% and the nitrogen concentration in the gas containing nitrogen and the unavoidable impurity gas component is within the range of about 80 to 90 vol%.

The gas separation and refinement apparatus of the third stage is not essential. For example, a fuel gas having a heating value per unit volume three times that of the blast furnace gas or higher can be obtained by mixing the gas containing hydrogen, nitrogen, and the unavoidable impurity gas component separated with the gas separation and refinement apparatus of the first stage and the gas containing carbon monoxide and the unavoidable impurity gas component separated with the gas separation and refinement apparatus of the second stage.

The first embodiment described above will now be described in further detail by citing concrete examples.

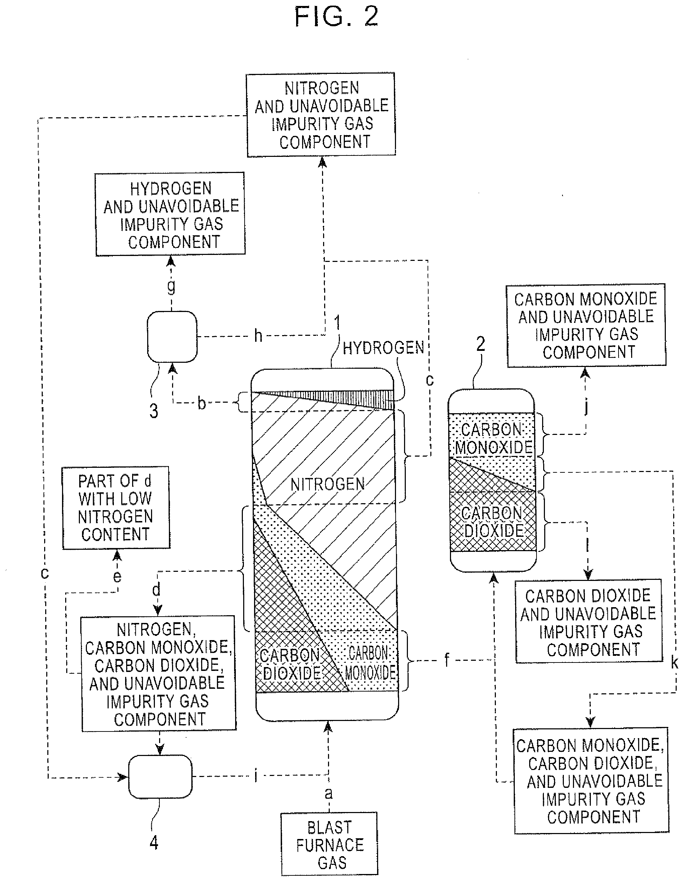

Fig. 2 is a schematic illustration of a separation operation in which pressure swing adsorption (PSA) apparatuses are used as the gas separation and refinement apparatuses of the first and second stages. In Fig. 2, reference numeral 1 denotes a gas separation and refinement apparatus of the first stage (a pressure swing adsorption apparatus including an adsorption tower in which a substance that mainly adsorbs carbon monoxide and carbon dioxide is charged), reference numeral 2 denotes a gas separation and refinement apparatus of the second stage (a pressure swing adsorption apparatus including an adsorption tower in which a substance that mainly adsorbs carbon dioxide is charged), and reference numeral 3 denotes a gas separation and refinement apparatus (hydrogen separator) of the third stage.

The distribution states of the respective gas components in the drawing are schematic expressions for illustrating the states of separation of the gases and differ from the gas distribution in the towers of actual PSA apparatuses.

A blast furnace gas a is introduced into a gas separation and refinement apparatus 1 of a first stage. In this case, dust (solid particles), mist (liquid fine particles), moisture, and sulfur in the blast furnace gas are preferably removed in advance. This is because dust may clog the fine pores of the adsorbent, thereby decreasing the performance, mist and moisture may accelerate deterioration of the adsorbent, and sulfur may decrease the performance due to poisoning of adsorption sites of the adsorbent.

Any substance that mainly adsorbs carbon monoxide and carbon dioxide among hydrogen, nitrogen, carbon monoxide, and carbon dioxide can be used as the adsorbent to be charged in the adsorption tower of the gas separation and refinement apparatus 1 of the first stage and there is no specific limitation. However, Y-type zeolite or activated carbon carrying monovalent copper or subjected to ion exchange is preferred for its high capacity to adsorb carbon monoxide and carbon dioxide. In particular, a substance that uses activated carbon as a carrier has high durability to sulfur and moisture compared to zeolite and is thus more preferable. The pressure during adsorption and the pressure during desorption are not particularly limited but the adsorption pressure is preferably about 100 to 500 kPa (absolute pressure) and the desorption pressure is preferably about 5 to 100 kPa (absolute pressure) to facilitate operation. In particular, the temperature at which the substance carrying monovalent copper or subjected to ion exchange is used is preferably about 50 to 100°C since the adsorption capacity for carbon monoxide and carbon dioxide is significantly greater than that for other components and thus the separation is easy. Since the pressure and the temperature of the blast furnace gas are about 350 kPa (absolute pressure) and 50 to 60°C after having gone through a dust collector from the blast furnace top, such pressure and temperature can be directly utilized and no additional energy is needed if an adsorbent carrying monovalent copper or subjected to ion exchange is used, thereby contributing to economy.

The gas a (blast furnace gas) introduced into the gas separation and refinement apparatus 1 of the first stage is separated into a gas b containing hydrogen, nitrogen, and an unavoidable impurity gas component, a gas c containing nitrogen and an unavoidable impurity gas component, a gas d containing nitrogen, carbon monoxide, carbon dioxide, and an unavoidable impurity gas component, gas e which is part of the gas d with relatively less nitrogen (discharged in a later stage of the step of discharging the gas d), and a gas f containing carbon monoxide, carbon dioxide, and an unavoidable impurity gas component, as shown in Fig. 2.

The gas b containing hydrogen, nitrogen, and the unavoidable impurity gas component can be directly used as a fuel gas in ironworks or can be separated using a hydrogen separator, i.e., a gas separation and refinement apparatus 3 of a third stage, into a gas g containing hydrogen and an unavoidable impurity gas component having a high hydrogen concentration. The hydrogen separator may be a PSA apparatus that adsorbs nitrogen or may be an adsorbent charged in the upper part of the adsorption tower of the gas separation and refinement apparatus 1 of the first stage separate from the adsorbent described earlier. Alternatively, the hydrogen separator may be a hydrogen separating film that separates hydrogen by using the size of molecules. A gas h containing nitrogen and the unavoidable impurity gas component and obtained after the gas g containing hydrogen and the unavoidable impurity gas component has been separated may be mixed with the gas c containing nitrogen and the unavoidable impurity gas component separated with the gas separation and refinement apparatus of the first stage.

The gas d containing nitrogen, carbon monoxide, carbon dioxide, and the unavoidable impurity gas component separated with the gas separation and refinement apparatus 1 of the first stage is mixed with all or part of the gas c containing nitrogen and the unavoidable impurity gas component in a mixer 4 and returned as a gas i to the gas separation and refinement apparatus 1. Here, the mixing ratio is preferably controlled so that the nitrogen concentration in the gas i is always higher than that in the blast furnace gas.

Next, the gas e with relatively less nitrogen (discharged in the later stage of the step of discharging the gas d) from the gas d containing nitrogen, carbon monoxide, carbon dioxide, and the unavoidable impurity gas component separated with the gas separation and refinement apparatus 1 of the first stage is preferably not introduced into a gas separation and refinement apparatus 2 of the second stage since it decreases the carbon monoxide concentration. However, since the gas e contains a substantial amount of carbon monoxide, it has a high heating value and can be introduced as a fuel gas into a by-product gas of ironworks. This is advantageous in terms of energy balance since the energy required for separating the blast furnace gas can be offset.

Next, a gas f containing carbon monoxide, carbon dioxide, and an unavoidable impurity gas component separated with the gas separation and refinement apparatus 1 of the first stage is introduced into the gas separation and refinement apparatus 2 of the second stage.

The adsorbent charged in the adsorption tower of the gas separation and refinement apparatus 2 of the second stage may be any substance that can separate carbon monoxide and carbon dioxide and is thus not particularly designated. Commercially available activated carbon and zeolite can be used. The pressure during adsorption and the pressure during desorption are not particularly limited but the adsorption pressure is preferably about 100 to 500 kPa (absolute pressure) and the desorption pressure is preferably about 5 to 100 kPa (absolute pressure) to facilitate operation. In order to decrease the injection energy, the adsorption pressure is more preferably about 100 to 200 kPa.

As shown in Fig. 2, the gas f containing carbon monoxide, carbon dioxide, and the unavoidable impurity gas component introduced into the gas separation and refinement apparatus 2 of the second stage is separated into a gas j containing carbon monoxide and an unavoidable impurity gas component, a gas k containing carbon monoxide, carbon dioxide, and an unavoidable impurity gas component, and a gas 1 containing carbon dioxide and an unavoidable impurity gas component.

The gas j containing carbon monoxide and the unavoidable impurity gas component has a high carbon monoxide concentration and can thus be used as a fuel gas in ironworks or a chemical raw material.

The gas k containing carbon monoxide, carbon dioxide, and the unavoidable impurity gas component separated next may be mixed with the gas f containing carbon monoxide, carbon dioxide, and the unavoidable impurity gas component introduced from the gas separation and refinement apparatus 1 of the first stage and may be re-introduced into the gas separation and refinement apparatus 2 of the second stage. Alternatively, the gas k containing carbon monoxide, carbon dioxide, and the unavoidable impurity gas component can be introduced as a high heating value gas into a by-product gas of ironworks since it contains a substantial amount of carbon monoxide.

When a hydrogen separator is provided as the gas separation and refinement apparatus 3 of the third stage, the separator may be a device equipped with a hydrogen-separating film or a PSA or TSA device that adsorbs nitrogen. In the case where a PSA or TSA device that adsorbs nitrogen is used, deaeration operation by reducing pressure and washing or reverse washing operation using hydrogen are preferably conducted upon breakdown of the adsorbent by the components other than hydrogen. The deaeration operation by reducing pressure and washing or reverse washing operation using hydrogen enable to maximally suppress the loss of nitrogen. The source of hydrogen used in washing or reverse washing operation is not particularly limited but it is advantageous to use the gas g containing hydrogen and the unavoidable impurity gas component in the first embodiment.

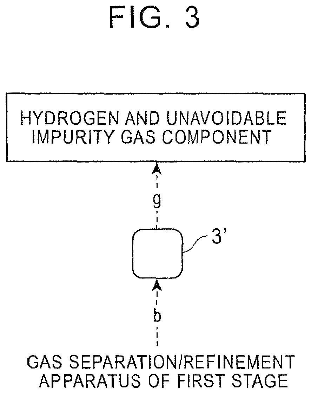

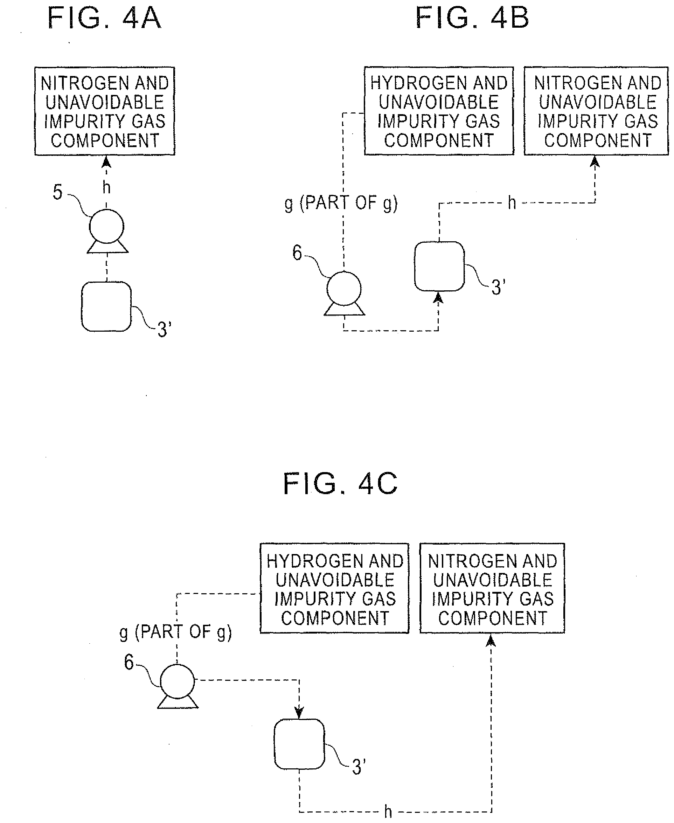

A schematic diagram of separation operation of a gas containing hydrogen and an unavoidable impurity gas component when the gas separation and refinement apparatus 3 of the third stage is a separator that utilizes adsorption (represented by 3' in Figs. 3 and 4) is shown in Fig. 3, a schematic diagram of deaeration operation by reducing pressure is shown in Fig. 4A, a schematic diagram of washing operation using hydrogen is shown in Fig. 4B, and a schematic diagram of reverse washing operation using hydrogen is shown in Fig. 4C.

When conducting deaeration operation by reducing pressure, as shown in Fig. 4A, the gas h containing nitrogen and the unavoidable impurity gas component remaining in the gas separation and refinement apparatus 3' of the third stage is evacuated with a evacuation device 5 such as a vacuum pump. When conducting washing operation using hydrogen, as shown in Fig. 4B, part of the gas g containing hydrogen and the unavoidable impurity gas component and serving as a washing gas is introduced from the inlet side of the gas separation and refinement apparatus 3' of the third stage by using a blowing device 6 such as a blower so as to evacuate the remaining gas h containing nitrogen and the unavoidable impurity gas component from the outlet side. When conducting reverse washing operation using hydrogen, as shown in Fig. 4C, part of the gas g containing hydrogen and the unavoidable impurity gas component and serving as a washing gas is introduced from the outlet side of the gas separation and refinement apparatus 3' of the third stage by using the blowing device 6 such as a blower so as to evacuate the remaining gas h containing nitrogen and the unavoidable impurity gas component from the inlet side.

Note that in Figs. 3 and 4, the structures other than the deaeration by pressure reduction and washing and reverse washing with a gas containing hydrogen and an unavoidable impurity gas component are the same as those shown in Fig. 2. The same components are represented by the same reference symbols and the descriptions therefor are omitted.

### Examples (Reference)

Described below are the results obtained by the method of separating a blast furnace gas according to the first embodiment in which the separation with the gas separation and refinement apparatus of the first stage and the gas separation and refinement apparatus of the second stage is conducted by a pressure swing adsorption technique. Separation with the gas separation apparatus of the third stage was not conducted. Any known techniques relating this technology are applicable as the separation operations and conditions employed in this experimental example as long as corresponding effects can be obtained. The descriptions below do not limit the technical scope of this case. Indications of the pressure are all in terms of absolute pressure.

Gas separation with the gas separation and refinement apparatus of the first stage was conducted with a gas separation and refinement apparatus including an adsorption tower in which activated carbon carrying monovalent copper was charged. The steps of the gas separation operation of the first stage were the following five steps: "pressure elevation", "adsorption", "pressure reduction 1", "reverse washing", and "pressure reduction 2" in accordance with the flow of the gas flowing in and out of a tower filled with an adsorbent (hereinafter referred to as "adsorption tower"). After the "pressure reduction 2" step, the "pressure elevation" step was performed so that the operation was conducted in cycle.

In the "pressure elevation" step, a gas containing nitrogen, carbon monoxide, carbon dioxide, and an unavoidable impurity gas component discharged from the outlet side of the adsorption tower in the "pressure reduction 1" step and part of a gas containing nitrogen and an unavoidable impurity gas component discharged from the outlet side of the adsorption tower in the "adsorption" step were mixed and introduced from the inlet side of the adsorption tower pressure of which was reduced to 5 kPa. During this operation, the mixing ratio of the gas containing nitrogen, carbon monoxide, carbon dioxide, and the unavoidable impurity gas component to the gas containing nitrogen and the unavoidable impurity gas component was adjusted to 2:1 on a volume basis so that the nitrogen concentration was 50 vol% or more. A blast furnace gas (3 vol% hydrogen, 52 vol% nitrogen, 23 vol% carbon monoxide, and 22 vol% carbon dioxide) was also introduced until the gas pressure in the adsorption tower was 300 kPa.

In the "adsorption" step following the "pressure elevation" step, at the same time as introduction of the blast furnace gas from the inlet side of the adsorption tower, a gas was discharged from the outlet side of the adsorption tower so that the gas pressure in the adsorption tower was constant. (This discharge is referred to as a "first period of the first stage" of the gas discharge.) As for the gas discharged in the first period of the first stage, a gas containing hydrogen, nitrogen and an unavoidable impurity gas component was discharged in an initial period and then a gas containing nitrogen and an unavoidable impurity gas component was discharged. The composition of the gas continuously changed with the discharge time. The composition of the gas containing hydrogen, nitrogen, and the unavoidable impurity gas component was 50 to 7 vol% hydrogen and 50 to 90 vol% nitrogen. The composition of the gas containing nitrogen and the unavoidable impurity gas component was 7 to 4 vol% hydrogen and 92 to 90 vol% nitrogen. Introduction of the blast furnace gas was stopped when the nitrogen concentration in the discharged gas containing nitrogen and the unavoidable impurity gas component reached 90 vol%, which ended the "adsorption" step.

In the "pressure reduction 1" step following the "adsorption step", the gas was discharged from the outlet side of the adsorption tower until the gas pressure in the adsorption tower was close to 100 kPa. (This discharge is referred to as a "second period of the first stage" of the gas discharge.) The gas discharged in the second period of the first stage is a gas containing nitrogen, carbon monoxide, carbon dioxide, and an unavoidable impurity gas component. The composition of this gas continuously changed with the discharge time and was 89 to 41 vol% nitrogen, 5 to 43 vol% carbon monoxide, and 2 to 15 vol% carbon dioxide.

In the "reverse washing" step following the "pressure reduction 1" step, part of the gas containing carbon monoxide, carbon dioxide, and the unavoidable impurity gas component discharged in the "pressure reduction 2" step described below was introduced from the outlet side of the adsorption tower while maintaining the gas pressure in the adsorption tower to about 100 kPa. At the same time, a gas was discharged from the inlet side of the adsorption tower (this discharge gas is referred to as a "third period of the first stage" of the gas discharge).

Introduction of the gas was stopped when the nitrogen concentration in the gas discharged from the inlet side of the adsorption tower became less than 1 vol%. The gas discharged in the third period of the first stage is a gas containing nitrogen, carbon monoxide, carbon dioxide, and an unavoidable impurity gas component. The composition of this gas continuously changed with the discharge time and was 22 to 1 vol% nitrogen, 37 to 57 vol% carbon monoxide, and 40 to 43 vol% carbon dioxide.

In the "pressure reduction 2" step following the "reverse washing" step, the components remaining in the adsorption tower were discharged with a vacuum pump from the outlet side of the adsorption tower until the gas pressure in the adsorption tower was 5 kPa. (This discharge gas is referred to as a "fourth period of the first stage" of the gas discharge".) The gas discharged in the fourth period of the first stage is a gas containing carbon monoxide, carbon dioxide, and an unavoidable impurity gas component. The composition of this gas continuously changed with the discharge time and was 42 to 37 vol% carbon monoxide and 57 to 63 vol% carbon dioxide.

The gas discharged in the "pressure reduction 2" step was further separated with a gas separator of the second stage into a gas containing carbon monoxide and an unavoidable impurity gas component and a gas containing carbon dioxide and an unavoidable impurity gas component. The gas separation with the gas separation and refinement apparatus of the second stage was conducted with a gas separation and refinement apparatus including an adsorption tower charged with activated carbon. The steps of the gas separation operation of the second stage were the following four steps: "pressure elevation", "adsorption", "pressure reduction 1", and "pressure reduction 2" in accordance with the flow of the gas flowing in and out of a tower filled with an adsorbent (hereinafter referred to as "adsorption tower"). After the "pressure reduction 2" step, the "pressure elevation" step was performed so that the operation was conducted in cycle.

In the "pressure elevation" step, the gas (second period of the second stage) containing carbon monoxide, carbon dioxide, and the unavoidable impurity gas component discharged from the outlet side of the adsorption tower in the "pressure reduction 1" step and a gas (the fourth period of the first stage) containing carbon monoxide, carbon dioxide, and the unavoidable impurity gas component separated with the gas separation and refinement apparatus of the first stage were mixed at a volume ratio of 1:3 and introduced from the inlet side of the adsorption tower gas pressure of which was reduced to 5 kPa until the pressure of the gas in the adsorption tower was 100 kPa.

In the "adsorption" step following the "pressure elevation" step, a gas (fourth period of the first stage) containing carbon monoxide, carbon dioxide, and the unavoidable impurity gas component separated with the gas separation and refinement apparatus of the first stage was introduced from the inlet side of the adsorption tower. At the same time, a gas was discharged from the outlet side so that the gas pressure in the adsorption tower was constant substantially at 100 kPa. (This discharge is referred to as a "first period of the second stage" of the gas discharge".) In the "adsorption" step, introduction of gas was ended when the carbon monoxide concentration in the discharged gas containing carbon monoxide and the unavoidable impurity gas component was 75 vol%. The gas discharged in the first period of the second stage is a gas containing carbon monoxide and an unavoidable impurity gas component. The composition of the gas continuously changed with the discharge time and was 85 to 89 vol% carbon monoxide.

In the "pressure reduction 1" step following the "adsorption" step, the components remaining in the adsorption tower were discharged with a vacuum pump or the like from the outlet side of the adsorption tower until the gas pressure in the adsorption tower was 35 kPa. (This discharge is referred to as a "second period of the second stage" of the gas discharge.) The gas discharged in the second period of the second stage is a gas containing carbon monoxide, carbon dioxide, and an unavoidable impurity gas component. The composition of this gas continuously changed with the discharge time and was 85 to 57 vol% carbon monoxide and 15 to 43 vol% carbon dioxide.

In the "pressure reduction 2" step following the "pressure reduction 1" step, the components remaining in the adsorption tower were discharged with a vacuum pump or the like from the inlet side of the adsorption tower until the gas pressure in the adsorption tower was 5 kPa. (This discharge is referred to as a "third period of the second stage" of the gas discharge.) The gas discharged in the third period of the second stage is a gas containing carbon dioxide and an unavoidable impurity gas component. The composition of the gas continuously changed with the discharge time and was 81 to 96 vol% carbon dioxide.

### SECOND EMBODIMENT (THE PRESENT INVENTION)

A second embodiment has been conceived under such circumstances and aims to provide a method and apparatus for separating carbon dioxide from a blast furnace gas mainly containing carbon dioxide, nitrogen, carbon monoxide, and hydrogen, and concentrating and separating combustible components in the remaining gas.

A blast furnace gas separation method provided by a first aspect of the second embodiment is a method for separating a blast furnace gas containing carbon dioxide, nitrogen, hydrogen, and carbon monoxide, comprising:
a first pressure swing adsorption gas separation step for repeating a cycle including a first adsorption step and a first desorption step, based on a pressure swing adsorption gas separation method that uses a first adsorption tower filled with a first adsorbent that preferentially adsorbs carbon dioxide, and,
the first adsorption step comprising: introducing a blast furnace gas to the first adsorption tower to allow carbon dioxide in the blast furnace gas to absorb onto the first adsorbent, and discharging a first unadsorbed gas from the adsorption tower,
the first desorption step comprising: allowing carbon dioxide to desorb from the first adsorbent and discharging a desorbed gas to outside the tower,
a second pressure swing adsorption gas separation step for repeating a cycle including a second adsorption step and a second desorption step, based on a pressure swing adsorption gas separation method that uses a second adsorption tower filled with a second adsorbent that preferentially adsorbs carbon monoxide,
the second adsorption step comprising: introducing the first unadsorbed gas into the second adsorption tower to allow carbon monoxide in the first unadsorbed gas to adsorb onto the second adsorbent, and discharging a second unadsorbed gas from the adsorption tower,
the second desorption step comprising: allowing carbon monoxide to desorb from the second adsorbent and discharging a desorbed gas to outside the tower.

Preferably, the first adsorbent is activated carbon.

Preferably, the second adsorbent is activated carbon impregnated with copper chloride.
In this method, a gas discharged from the start of the first adsorption step up to a particular point of time is recovered through a hydrogen recovery pipe from the first unadsorbed gas discharged from the first adsorption tower in the first adsorption step.

According to this separation method, in separating carbon dioxide and nitrogen from the blast furnace gas containing carbon dioxide, nitrogen, hydrogen, and carbon monoxide, two stages of pressure swing adsorption gas separation steps using the PSA technique are performed so that the four types of gas components can be selectively concentrated and separated. In particular, first, in the first pressure swing adsorption gas separation step, carbon dioxide preferentially adsorbed onto the first adsorbent is desorbed and recovered to efficiently separate carbon dioxide. An activated carbon-based adsorbent that has an adsorption capacity for carbon dioxide extremely larger than those for other gas components is preferably used as the first adsorbent, for example. The first unadsorbed gas discharged from the first adsorption tower without being adsorbed onto the first adsorbent in the first adsorption step is a gas mainly composed of nitrogen, hydrogen, and carbon monoxide. The adsorbability of hydrogen to the adsorbent tends to be poor compared to other component gases (nitrogen and carbon monoxide). Thus, hydrogen can be concentrated and separated by recovering an initial gas of the first unadsorbed gas. Next, in the second pressure swing adsorption gas separation step, the gas introduced into the second adsorption tower and subjected to the second adsorption step (the latter half of the gas of the first unadsorbed gas) is a gas mainly containing nitrogen and carbon monoxide obtained by significantly removing hydrogen and carbon dioxide from the blast furnace gas. In the second pressure swing adsorption gas separation step, carbon monoxide preferentially adsorbed onto the second adsorbent is desorbed and recovered to efficiently separate and recover carbon monoxide. An activated carbon impregnated with copper chloride and having an adsorption capacity for carbon monoxide significantly larger than the adsorption capacity for nitrogen is preferably used as the second adsorbent, for example. The second unadsorbed gas discharged from the second adsorption tower without being adsorbed onto the second adsorbent in the second adsorption step is a gas mainly composed of nitrogen.

A blast furnace gas separation system provided by a second aspect of the second embodiment is a system for separating a blast furnace gas containing carbon dioxide, nitrogen, hydrogen, and carbon monoxide, the system including a first pressure swing adsorption gas separation apparatus that uses a pressure swing adsorption gas separation technique of using a first adsorption tower charged with a first adsorbent for preferentially adsorbing carbon dioxide, the apparatus being configured to introduce the blast furnace gas into the first adsorption tower, discharge a first unadsorbed gas from the adsorption tower while allowing carbon dioxide in the blast furnace gas to adsorb onto the first adsorbent, desorb carbon dioxide from the first adsorbent, and discharge a desorbed gas to outside the tower; and a second pressure swing adsorption gas separation apparatus that uses a pressure swing adsorption gas separation technique of using a second adsorption tower charged with a second adsorbent for preferentially adsorbing carbon monoxide, the apparatus being configured to introduce the first unadsorbed gas into the second adsorption tower, discharge a second unadsorbed gas from the adsorption tower while allowing carbon monoxide in the first unadsorbed gas to adsorb onto the second adsorbent, desorb carbon monoxide from the second adsorbent, and discharge a desorbed gas to outside the tower. According to a blast furnace gas separation system having such a structure, the method for separating the blast furnace gas according to the first aspect of the present invention can be properly carried out.

According to the second embodiment, a gas containing concentrated combustible components can be obtained by separating noncombustible carbon dioxide and nitrogen from the blast furnace gas and the heating value can be significantly increased for fuel usage. Accordingly, auxiliary fuels used to compensate for the deficiency of the heating value can be reduced or eliminated and the carbon dioxide emission derived from the auxiliary fuels can be reduced. If the technology of storing concentrated and separated carbon dioxide underground or undersea is put into practical use in the future, contribution to reducing the carbon dioxide emission can be made.

The blast furnace gas separation method according to the second embodiment will now be described in detail with reference to the drawings.

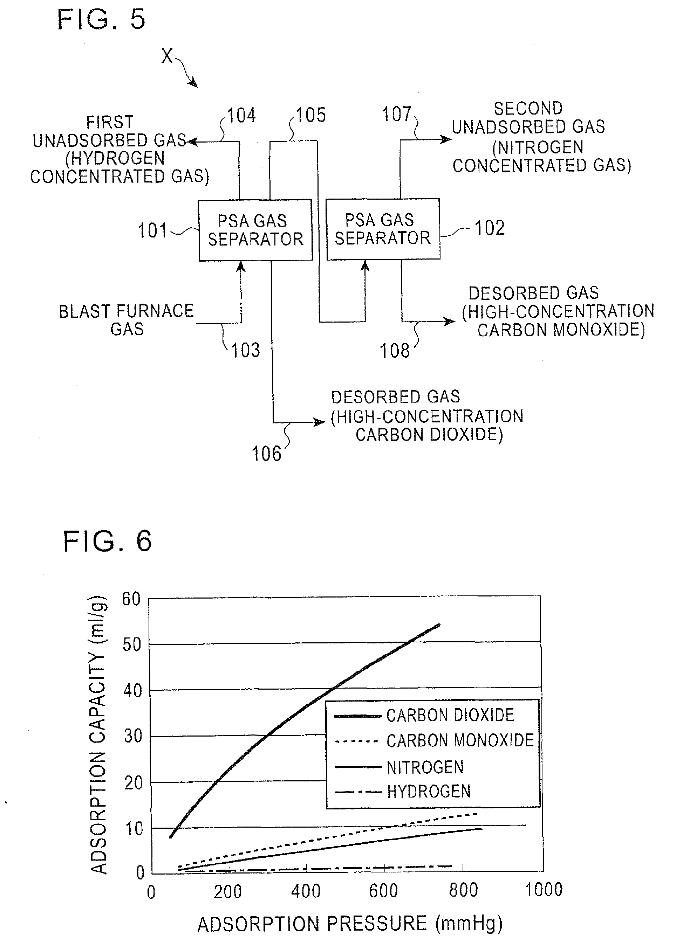

Fig. 5 shows a schematic structure of a blast furnace gas separation system that can be used to carry out the blast furnace gas separation method of the second embodiment. A blast furnace gas separation system X includes pressure swing adsorption gas separators (PSA gas separators) 101 and 102 that are provided in series in two stages and piping connecting these and is configured to carry out operation of a pressure swing adsorption gas separation technique (PSA technique) to separate and recover an unadsorbed gas in which poorly adsorbable components are concentrated and a desorbed gas in which easily adsorbable components are concentrated from a blast furnace gas containing carbon dioxide, nitrogen, hydrogen, and carbon monoxide.

The PSA gas separator 101 includes a plurality of adsorption towers (first adsorption towers, not shown in the drawing) in which a first adsorbent for preferentially adsorbing carbon dioxide is charged and is configured to carry out the first pressure swing adsorption gas separation step (first PSA gas separation step). For example, activated carbon made from vegetable materials such as coconut shells and bamboo, coal materials, and petroleum materials can be used as the first adsorbent.

In the first PSA gas separation step, for example, a cycle including a first adsorption step, a first washing step, and a first desorption step is repeated in every adsorption tower. The first adsorption step is a step of introducing a blast furnace gas into an adsorption tower inside of which is in a particular high pressure state to allow carbon dioxide in the blast furnace gas to adsorb onto the first adsorbent and discharging the first unadsorbed gas from that adsorption tower. The first washing step is a step of washing the adsorption tower after completion of the first adsorption step by using part of the desorbed gas discharged from another adsorption tower carrying out the first desorption step. The first desorption step is a step of desorbing carbon dioxide from the first adsorbent by reducing the pressure inside the adsorption tower and discharging the adsorbed gas in which carbon dioxide is concentrated to outside the tower.

A blast furnace gas supply pipe 103 for supplying the blast furnace gas is connected to the PSA gas separator 101. An example of the blast furnace gas is an exhaust gas from a blast furnace in ironworks subjected to a dehumidifying treatment. The composition (volume concentrations) of the blast furnace gas is, for example, 19 to 24% carbon dioxide, 52 to 60% nitrogen, 2 to 6% hydrogen, and 21 to 27% carbon monoxide.

A hydrogen recovery pipe 104, an unadsorbed gas delivery pipe 105, and a desorbed gas recovery pipe 106 are also connected to the PSA gas separator 101. The hydrogen recovery pipe 104 is for recovering part of the first unadsorbed gas discharged from the adsorption tower. The unadsorbed gas delivery pipe 105 is for delivering the first unadsorbed gas from the adsorption tower to the PSA gas separator 102. The PSA gas separator 1 is equipped with a mechanism (not shown) for switching between a state in which the first unadsorbed gas from the adsorption tower flows through the hydrogen recovery pipe 104 and a state in which the first unadsorbed gas flows through the unadsorbed gas delivery pipe 105. Note that the unabsorbed gas delivery pipe 105 may be equipped with a compressor for pressure-delivering the first unabsorbed gas to the PSA gas separator 102.

The PSA gas separator 102 includes a plurality of adsorption towers (second adsorption towers, not shown in the drawing) in which a second adsorbent for 'preferentially adsorbing carbon monoxide is charged and is configured to carry out the second pressure swing adsorption gas separation step (second PSA gas separation step). Activated carbon impregnated with a chemical substance that enhances the adsorption selectivity for carbon monoxide is suitable as the second adsorbent. For example, activated carbon impregnated with copper chloride is used. Activated carbon impregnated with copper chloride can be thermally reduced to form monovalent copper chloride so as to increase the adsorption selectivity for carbon monoxide. The activated carbon impregnated with copper chloride has a significantly small adsorption capacity for nitrogen. The unadsorbed gas delivery pipe 105, an unadsorbed gas retrieving pipe 107, and a desorbed gas recovery pipe 108 are connected to the PSA gas separator 102. The PSA gas separator 102 is preferably operated at a temperature of 25 to 80°C and more preferably at 30 to 60°C considering the adsorption characteristics of the copper chloride-impregnated activated carbon.

In the second PSA gas separation step, for example, a cycle including a second adsorption step, a second washing step, and a second desorption step is repeated in every adsorption tower. The second adsorption step is a step of introducing the first unadsorbed gas into an adsorption tower inside of which is in a particular high pressure state to allow carbon monoxide in the unadsorbed gas to adsorb onto the adsorbent and discharging a second unadsorbed gas from the adsorption tower. The second washing step is a step of washing the adsorption tower after completion of the second adsorption step by using part of the desorbed gas discharged from another adsorption tower carrying out the second desorption step. The second desorption step is a step of desorbing carbon monoxide from the second adsorbent by reducing the pressure inside the adsorption tower and discharging the desorbed gas in which carbon monoxide is concentrated to outside the tower.

During operation of the blast furnace gas separation system X having the above-described structure, a blast furnace gas is fed to the PSA gas separator 101 through the blast furnace gas supply pipe 103.

In the PSA gas separator 101, a cycle including the first adsorption step, the first washing step, and the first desorption step is repeated in every adsorption tower.

In the first adsorption step, a blast furnace gas is introduced into a adsorption tower inside of which is in a particular high-pressure state, carbon dioxide, i.e., a easily adsorbable component, is preferentially adsorbed onto the first adsorbent, and a first unadsorbed gas is discharged outside the tower. The adsorption pressure during the first adsorption step is, for example 100 to 400 kPa (gauge pressure). Here, in introducing the blast furnace gas, the first adsorption step can be carried out by using the source pressure of the exhaust gas from the blast furnace. In such a case, a compressor for carrying out the first adsorption step is not needed.

The adsorption capacity of the first adsorbent (activated carbon) for various gas components has the relationship, carbon dioxide >> carbon monoxide > nitrogen > hydrogen. Fig. 6 shows adsorption isotherms of activated carbon for carbon dioxide, carbon monoxide, nitrogen, and hydrogen at normal temperature (25°C). Here, the adsorption capacity for carbon dioxide is extremely large compared to those for other gas components; therefore, the amount of carbon dioxide adsorbed onto the first adsorbent is relatively large even when the adsorption pressure is set to a low level.

The adsorption capacities for carbon monoxide and nitrogen are smaller than that for carbon dioxide but larger than that for hydrogen. Accordingly, in the initial period of the first adsorption step, some carbon monoxide and nitrogen become adsorbed, and the hydrogen concentration in the first unadsorbed gas discharged outside the tower in the early stage of the first adsorption step is substantially high. As the first adsorption step proceeds, more carbon monoxide and nitrogen for which the adsorption capacity is small compared to that for carbon dioxide are discharged as the first unabsorbed gas outside the tower without being adsorbed, thereby gradually decreasing the hydrogen concentration in the first unadsorbed gas.

In the second embodiment, from the start of the first adsorption step up to some point during the first adsorption step, the first unadsorbed gas from the adsorption tower is recovered as hydrogen concentrated gas through the hydrogen recovery pipe 104. This recovery operation ends when the hydrogen concentration in the first unadsorbed gas constantly monitored with a sensor decreases to a particular level. In order to increase the recovery ratio of hydrogen, the hydrogen concentration at which recovery of the hydrogen concentrated gas ends is set to a low level, and in order to increase the concentration ratio of hydrogen, the hydrogen concentration at which the recovery ends is set to a high level. When the hydrogen concentration at which the recovery is ended is set to, for example, 10% to increase the recovery ratio of hydrogen, the hydrogen gas concentration in the entire hydrogen concentrated gas recovered is about 30%. Since the hydrogen concentration in the original blast furnace gas is 2 to 6%, the hydrogen concentration has increased fivefold or more. The hydrogen recovery ratio in this case is about 80%.

The first adsorption step is continued until breakdown of the first adsorbent in the tower, for example. Upon completion of the recovery of the hydrogen concentrated gas described above, the first unadsorbed gas discharged from the adsorption tower is delivered to the PSA gas separator 102 through the unadsorbed gas delivery pipe 105. Here, the gas flowing in the unadsorbed gas delivery pipe 105 is a gas mainly composed of remaining nitrogen and carbon monoxide since carbon dioxide and hydrogen have already been removed and has, for example, a nitrogen concentration of 60 to 65% and a carbon monoxide concentration of 30 to 35%.

In the first washing step, part of the desorbed gas discharged from another adsorption tower carrying out the first desorption step is used to wash the interior of the tower. In the first desorption step, the pressure in the adsorption tower is reduced to an atmospheric pressure or less to desorb the adsorbed gas from the first adsorbent. The desorbed gas contains a high concentration of carbon dioxide. The desorbed gas is discharged outside the tower and recovered through the desorbed gas recovery pipe 106. The recovered desorbed gas has, for example, a carbon dioxide concentration of 90 to 99%, and the carbon dioxide recovery ratio is 80 to 90%.

In the PSA gas separator 102, a cycle including the second adsorption step, the second washing step, and the second desorption step is repeated in every adsorption tower.

In the second adsorption step, the first unadsorbed gas is introduced into the adsorption tower inside of which is in a particular high pressure state, carbon monoxide, i.e., a easily adsorbable component, is preferentially adsorbed onto the second adsorbent, and a second unadsorbed gas in which nitrogen is concentrated is discharged outside the tower. The second adsorption step is continued until breakdown of the second adsorbent in the tower, for example. The adsorption pressure during the second adsorption step is, for example 100 to 400 kPa (gauge pressure).

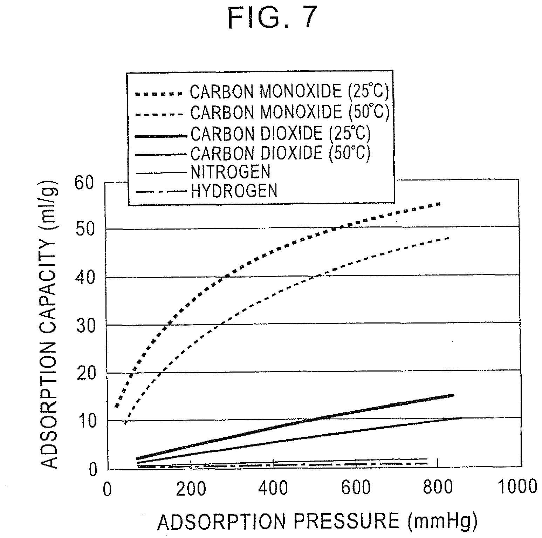

The adsorption capacity of the second adsorbent (activated carbon impregnated with copper chloride) for various gas components has the relationship, carbon monoxide » carbon dioxide > nitrogen > hydrogen. Fig. 7 shows adsorption isotherms of copper chloride-impregnated activated carbon for carbon monoxide, carbon dioxide, hydrogen, and nitrogen at normal temperature (25°C) and adsorption isotherms for carbon monoxide and carbon dioxide at a temperature (50°C) higher than normal temperature. Here, the adsorption capacity for carbon monoxide is extremely large compared to those for other gas components; therefore, the amount of carbon monoxide adsorbed onto the second adsorbent is relatively large even when the adsorption pressure is set to a low level. In contrast, the adsorption capacity for nitrogen is small irrespective of the adsorption pressure and thus most of nitrogen passes through the tower without being adsorbed onto the second adsorbent.

When carbon dioxide and carbon monoxide are compared between different temperature conditions, i.e., 25°C and 50°C, the adsorption capacity for carbon dioxide and carbon monoxide decreases under the same adsorption pressure at a high temperature of 50°C; however, the rate of decrease in the adsorption capacity at a high temperature (50°C) is greater for carbon dioxide than for carbon monoxide. This shows that separation of carbon monoxide and carbon dioxide in the second adsorption step is better achieved at a temperature of 50°C than 25°C. Accordingly, the second adsorption step is preferably carried out at a high temperature (50°C) rather than normal temperature considering the separation of carbon dioxide not adsorbed onto the first adsorbent from the first unadsorbed gas from the PSA gas separator 1 subjected to the second adsorption step.

The second unadsorbed gas discharged outside the tower in the second adsorption step is recovered through the unadsorbed gas retrieving pipe 107. The recovered second unadsorbed gas has, for example, a nitrogen concentration of 80 to 95% and the nitrogen recovery ratio is 70 to 99%.

In the second washing step, part of the desorbed gas discharged from another adsorption tower carrying out the second desorption step is used to wash the interior of the tower. In the second desorption step, the pressure in the adsorption tower is reduced to an atmospheric pressure or less to desorb the adsorbed gas from the adsorbent. The desorbed gas contains a high concentration of carbon monoxide.

The desorbed gas is discharged outside the tower and recovered through the desorbed gas recovery pipe 108. The recovered desorbed gas has, for example, a carbon monoxide concentration of 90 to 99%, and the carbon monoxide recovery ratio is 80 to 90%.

According to the blast furnace gas separation method that uses the blast furnace gas separation system X, the four types of gas components (carbon dioxide, hydrogen, carbon monoxide, and nitrogen) contained in the blast furnace gas can be selectively concentrated and separated by performing PSA gas separation steps in two stages by a PSA technique. In other words, according to this embodiment, a gas containing concentrated combustible components can be obtained by separating noncombustible carbon dioxide and nitrogen from the blast furnace gas and the heating value can be significantly increased for fuel usage. Accordingly, auxiliary fuels used to compensate for the deficiency of the heating value can be reduced or eliminated and the carbon dioxide emission derived from the auxiliary fuels can be reduced. If the technology of storing concentrated and separated carbon dioxide underground or undersea is put into practical use in the future, contribution to reducing the carbon dioxide emission can be made.

Moreover, according to the second embodiment, hydrogen and carbon monoxide which are combustible components can be selectively concentrated and separated. The first unadsorbed gas (hydrogen concentrated gas) recovered through the hydrogen recovery pipe 104 can be effectively used as a high value-added fuel when used as a mixture with a gas, such as coke oven gas (hydrogen concentration of about 40 to 50%) generated in ironworks, that has a relatively high hydrogen concentration. The desorbed gas (high concentration carbon monoxide) recovered through the desorbed gas recovery pipe 108 has a high heating value and is obtainable in a relatively large absolute quantity; thus, it can be effectively used as a fuel.

Although the second embodiment has been described as above, the second embodiment is not limited to this and various modifications are possible without departing from the spirit of the invention.

### Examples

The usefulness of the second embodiment will now be described by using examples.

In this example, two PSA gas separators 101 and 102 shown in Fig. 5 were used to separate a blast furnace gas. The PSA gas separators 101 and 102 are each a three-tower PSA equipped with three adsorption towers. Each adsorption tower of the PSA gas separator 101 was charged with 2.0 L of coconut shell-based activated carbon as an adsorbent. Each adsorption tower of the PSA gas separator 102 was charged with 2.0 L of activated carbon impregnated with copper chloride as an adsorbent. An attempt was made to separate carbon dioxide, carbon monoxide, and other gas components from a blast furnace gas (22% carbon dioxide, 52% nitrogen, 3% hydrogen, and 23% carbon monoxide) using these devices. The amount of the blast furnace gas fed to the PSA gas separator 1 was 1500 L/hr (on a standard condition basis).

In the PSA gas separator 101, the maximum pressure in the tower in the first adsorption step was set to 300 kPa (gauge pressure) and the minimum pressure in the tower in the first desorption step was set to -90 kPa (gauge pressure). Next, the gas that had not been adsorbed onto the adsorbent in the tower of the PSA gas separator 1 was fed to the PSA gas separator 102. In the PSA gas separator 102, the maximum pressure in the tower in the second adsorption step was set to 200 kPa (gauge pressure) and the minimum pressure in the tower in the second desorption step was set to -90 kPa (gauge pressure).

As a result, the gas obtained by the first desorption step in the PSA gas separator 101 was a gas mainly composed of carbon dioxide, the amount of the gas obtained was 293.3 L/hr (on a standard condition basis), the carbon dioxide concentration was 90%, and the recovery ratio of carbon dioxide (the ratio of the amount of carbon dioxide gas recovered to the amount of carbon dioxide gas contained in the blast furnace gas) was 80%. The gas obtained by the second desorption step in the PSA gas separator 102 was a gas mainly composed of carbon monoxide, the amount of the gas obtained was 306.7 L/hr (on a standard condition basis), the carbon monoxide concentration was 90%, and the recovery ratio of carbon monoxide (the ratio of the amount of carbon monoxide gas recovered to the amount of carbon monoxide gas contained in the blast furnace gas) was 80%. The gas that had not been adsorbed onto the adsorbent in the tower of the PSA gas separator 2 was a gas mainly composed of nitrogen gas and the amount obtained was 900 L/hr (on a standard condition basis).

### THIRD EMBODIMENT (NOT PART OF THE PRESENT INVENTION)

It is an object of a third embodiment to provide a method and an apparatus for selectively concentrating and separating carbon dioxide and hydrogen from a blast furnace gas by performing operation according to a PSA technique.

A first aspect of the third embodiment provides a method for separating a blast furnace gas containing carbon dioxide, nitrogen, hydrogen, and carbon monoxide by a pressure swing adsorption gas separation technique that uses a plurality of adsorption towers filled with an adsorbent that has a relatively high adsorption capacity for carbon dioxide and a relatively low adsorption capacity for hydrogen, the method comprising repeating a cycle that includes an adsorption step of introducing the blast furnace gas into the adsorption towers to allow carbon dioxide to adsorb onto the adsorbent and discharging an unadsorbed gas from the adsorption towers while the interior of the adsorption towers is in a relatively high pressure state and a desorption step of allowing carbon dioxide to desorb from the adsorbent and discharging a desorbed gas to outside the towers while the interior of the adsorption towers is in a relatively low pressure state, wherein the unadsorbed gas from the adsorption towers is recovered through a hydrogen recovery pipe from the start of the adsorption step to some point during the adsorption step and then retrieved through an outlet pipe different from the hydrogen recovery pipe.

In separating and recovering carbon dioxide as a target gas from a blast furnace gas, carbon dioxide is preferably adsorbed until the breakdown of the adsorbent occurs in the adsorption step to increase the recovery ratio and concentration. Regarding the unadsorbed gas discharged at an initial stage of the adsorption step, the concentration ratio of hydrogen having a relatively small adsorbability among gas components of the blast furnace gas is highest and the hydrogen concentration in the unadsorbed gas is relatively high. According to the separation method of this invention, since the unadsorbed gas at the initial stage having a high hydrogen concentration is recovered through a special pipe for recovering hydrogen, two components, i.e., carbon dioxide and hydrogen, can be concentrated and separated from a blast furnace gas by performing operation of a PSA technique in one stage.

According to an embodiment of the some point during the adsorption step is a time point at which a hydrogen concentration in the unadsorbed gas from the adsorption towers has decreased to a particular concentration.

According to another embodiment the some point during the adsorption step is a time point at which a particular fraction of the amount of time for the adsorption step has elapsed.

According to the first aspect of the third embodiment, preferably, the hydrogen recovery pipe is equipped with a filter charged with an additional adsorbent that has a relatively low adsorption capacity for hydrogen and a relatively high adsorption capacity for nitrogen and carbon monoxide.

According to the first aspect of the third embodiment, the additional adsorbent is preferably zeolite.

According to the first aspect of the third embodiment, the adsorption step is performed by utilizing a pressure of the blast furnace gas.

According to an embodiment of the first aspect of the third embodiment, the pressure in the adsorption towers in the desorption step is set to atmospheric pressure. In this case, preferably, part of the desorbed gas discharged outside one of the adsorption towers in the desorption step is preferably introduced by using a compressor into another one of the adsorption towers in which the adsorption step has ended.

According to another embodiment of the first aspect of the third embodiment, the pressure in the adsorption towers in the desorption step is reduced to less than atmospheric pressure. In this case, preferably, part of the desorbed gas discharged to outside one of the adsorption towers in the desorption step is introduced by using a discharge pressure of a vacuum pump into another one of the adsorption towers in which the adsorption step has ended.

According to the first aspect of the third embodiment, preferably, before introduction to the adsorption towers, the blast furnace gas is passed through pretreatment towers charged with an adsorbent that preferentially adsorbs sulfur compounds.

An apparatus for separating a blast furnace gas according to a second aspect of the third embodiment is an apparatus for separating a blast furnace gas containing carbon dioxide, nitrogen, hydrogen, and carbon monoxide by a pressure swing adsorption gas separation technique that uses a plurality of adsorption towers charged with an adsorbent, the apparatus being configured to introduce the blast furnace gas into the adsorption towers to allow carbon dioxide in the blast furnace gas to adsorb onto the adsorbent and discharge an unadsorbed gas from the adsorption towers while the interior of the adsorption towers is in a relatively high pressure state, and being configured to desorb carbon dioxide from the adsorbent and discharge a desorbed gas to outside the towers while the interior of the adsorption towers is in a relatively low pressure state, the apparatus including a hydrogen recovery pipe for recovering hydrogen from the unadsorbed gas from the adsorption towers; an outlet pipe different from the hydrogen recovery pipe; and switching means for switching between a state in which the unadsorbed gas from the adsorption towers flows through the hydrogen recovery pipe and a state in which the unadsorbed gas flows through the outlet pipe. According to the apparatus for separating the blast furnace gas having such a structure, the method for separating a blast furnace gas according to the first aspect of the third embodiment can be properly carried out.

According to the third embodiment, it becomes possible to recover, through the hydrogen recovery pipe, only a gas having a relatively high hydrogen concentration discharged from the start of the adsorption step up to some point during the adsorption step from the unadsorbed gas discharged from the adsorption tower carrying out the adsorption step. Thus, hydrogen concentrated to a particular level or higher can be recovered while recovering carbon dioxide at a relatively high concentration and high concentration ratio by one stage of the PSA operation. The gas in which hydrogen is concentrated has a relatively high heating value and can be effectively used as a fuel.

The blast furnace gas separation method according to the third embodiment will now be described in detail with reference to the drawings.

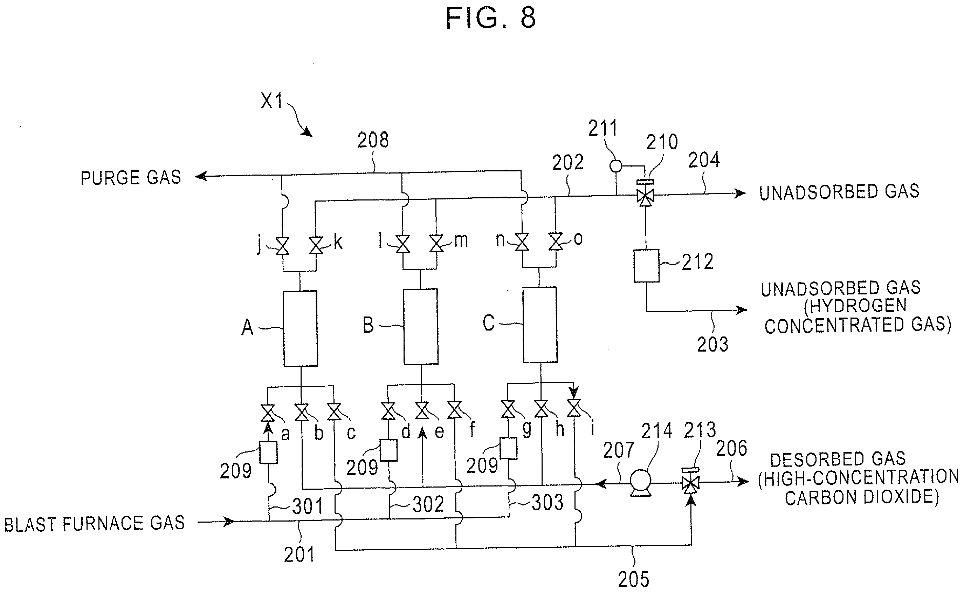

Fig. 8 shows a schematic structure of a blast furnace gas separation apparatus that can be used to carry out the method for separating a blast furnace gas according to the third embodiment. A blast furnace gas separator X1 includes three adsorption towers A, B, and C, a blast furnace gas pipe 201, an unadsorbed gas pipe 202, a hydrogen recovery pipe 203, an unadsorbed gas outlet pipe 204, a desorbed gas pipe 205, a desorbed gas recovery pipe 206, a washing pipe 207, and a purge gas outlet pipe 208, and is configured to perform a pressure swing adsorption gas separation technique (PSA technique) to separate and recover an unadsorbed gas in which poorly adsorbable components are concentrated and a desorbed gas in which easily adsorbable components are concentrated from a blast furnace gas containing carbon dioxide, nitrogen, hydrogen, and carbon monoxide.

An example of the blast furnace gas is an exhaust gas from a blast furnace in ironworks subjected to a dehumidifying treatment. The composition (volume concentrations) of the blast furnace gas is, for example, 19 to 24% carbon dioxide, 52 to 60% nitrogen, 2 to 6% hydrogen, and 21 to 27% carbon monoxide, and sulfur compounds (hydrogen sulfide, carbonyl sulfide, carbon disulfide, etc.) as impurities are also contained in an amount of several parts per million.

The adsorption towers A, B, C, are each filled with a particular adsorbent. An adsorbent that preferentially adsorbs carbon dioxide is used as the adsorbent. For example, activated carbon made from vegetable materials such as coconut shells and bamboo, coal materials, and petroleum materials can be used as the adsorbent.

The blast furnace gas pipe 1 is provided to introduce the blast furnace gas to the adsorption towers A, B, and C and includes branched pipes 301, 302, and 303 connected to the adsorption towers A, B, and C, respectively. The branched pipes 301, 302, and 303 are each provided with a pretreatment tower 209. Each pretreatment tower 9 is filled with an adsorbent that preferentially adsorbs sulfur compounds. An adsorbent impregnated or mixed with a chemical substance that selectively adsorbs sulfur compounds is suitable as the adsorbent; for example, activated carbon (granular Shirasagi TAC) impregnated with a copper-chromium-alkali metal three-way catalyst is used.

The unadsorbed gas pipe 202 is provided to allow the unadsorbed gas discharged from the adsorption towers A, B, and C to flow through and is connected to the unadsorbed gas outlet pipe 204 via a switch valve 210. The hydrogen recovery pipe 203 is connected to the unadsorbed gas pipe 2 via the switch valve 210 and is provided to recover part of the unadsorbed gas. The unadsorbed gas pipe 202 is equipped with a hydrogen concentration sensor 211 near the switch valve 210. The hydrogen concentration sensor 211 is provided to constantly monitor the hydrogen concentration in the gas flowing in the unadsorbed gas pipe 202. The switch valve 210 is configured to automatically switch between a state in which the gas in the unadsorbed gas pipe 202 flows through the hydrogen recovery pipe 203 and a state in which the gas flows through the unadsorbed gas outlet pipe 204 in accordance with the hydrogen concentration in the gas detected with the hydrogen concentration sensor 211. The hydrogen concentration sensor 211 and the switch valve 210 play a role of switching means. The hydrogen recovery pipe 203 is equipped with a filter 212 and the filter 212 is filled with an adsorbent (additional adsorbent) that has a low adsorption capacity for hydrogen and a high adsorption capacity for nitrogen and carbon monoxide. For example, zeolite can be used as such an adsorbent.

The desorbed gas pipe 205 is provided to allow the desorbed gas discharged from the adsorption towers A, B, and C to flow and is connected to the desorbed gas recovery pipe 206 via a switch valve 213. The washing pipe 207 is connected to the desorbed gas pipe 205 via the switch valve 213 and is provided to return part of the desorbed gas flowing in the desorbed gas pipe 205 to one of the adsorption towers A, B, and C. The washing pipe 207 is equipped with a compressor 214. The compressor 214 is provided to deliver the desorbed gas to the adsorption towers A, B, and C. The switch valve 213 is configured to switch between a state in which the gas in the desorbed gas pipe 205 flows in the desorbed gas recovery pipe 206 and a state in which the gas flows in the washing pipe 207. The purge gas outlet pipe 208 is provided to retrieve the gas discharged from the adsorption towers A, B, and C to outside the system.

Automatic valves a to o are provided to the pipes 201, 202, 205, 207, and 208. In the separation of the blast furnace gas by the PSA technique using the blast furnace gas separator X1, the cycle including, for example, an adsorption step, a washing step, and a desorption step is repeated in the adsorption towers A, B, and C by selecting whether to have the automatic valves a to o in a closed state or in an open state and selecting the switching state of the switch valves 210 and 213.

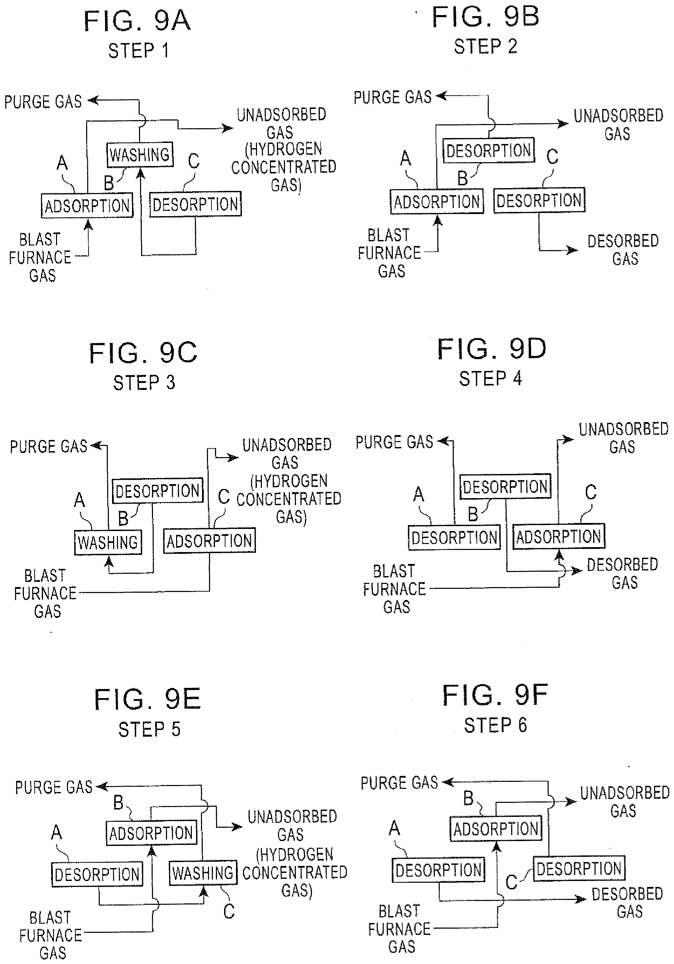

To be more specific, particular steps (steps 1 to 6) are conducted concurrently in the adsorption towers A, B, and C. The flow of the gas in the blast furnace gas separator X1 of the respective steps is schematically shown in Figs. 9A to 9F.

In step 1, an adsorption step is conducted in the adsorption tower A, a washing step is conducted in the adsorption tower B, and a desorption step is conducted in the adsorption tower C. The state of gas flow is shown in Fig. 9A.

As shown in Fig. 8 and Fig. 9A, a blast furnace gas is introduced into the adsorption tower A through the blast furnace gas pipe 201, the pretreatment tower 209, and the automatic valve a. In the adsorption tower A, carbon dioxide, which is a easily adsorbable component, is preferentially adsorbed onto the adsorbent and the unadsorbed gas is discharged outside the tower. The adsorption pressure during the adsorption step is, for example, 100 to 400 kPa (gauge pressure). Here, in introducing the blast furnace gas, the adsorption step can be carried out by using the source pressure of the exhaust gas from the blast furnace. In such a case, a compressor for carrying out the adsorption step is not needed. Note that trace amounts of sulfur compounds contained as impurities in the blast furnace gas introduced into the adsorption A are removed as the gas passes through the pretreatment tower 209. Accordingly, the problem of deterioration of the adsorbent in the adsorption tower A by the sulfur compounds can be avoided.

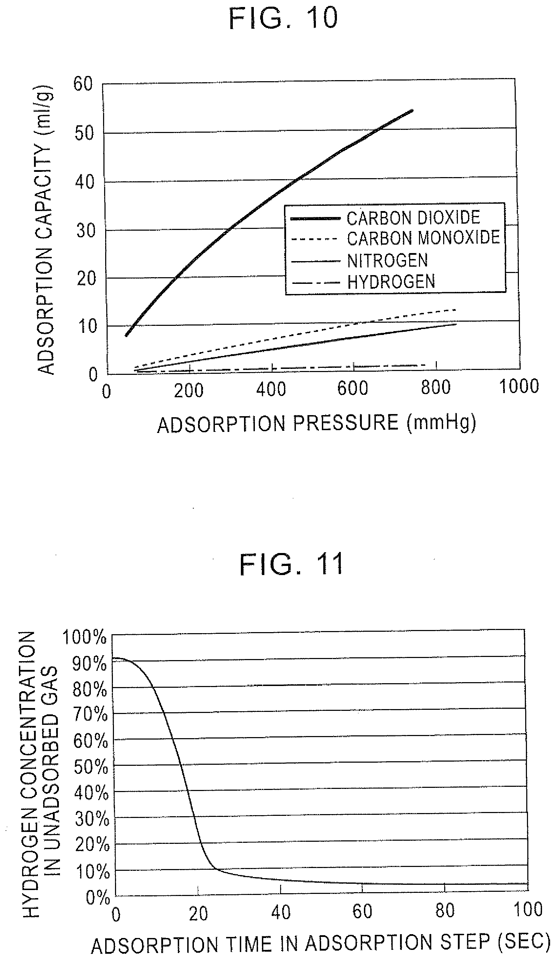

The adsorption capacity of the adsorbent (activated carbon) for various gas components has the relationship, carbon dioxide » carbon monoxide > nitrogen > hydrogen. Fig. 10 shows adsorption isotherms of activated carbon for carbon dioxide, carbon monoxide, nitrogen, and hydrogen at normal temperature (25°C). Here, the adsorption capacity for carbon dioxide is extremely large compared to those for other gas components; therefore, the amount of carbon dioxide adsorbed onto the adsorbent is relatively large even when the adsorption pressure is set to a low level.

The adsorption capacities for carbon monoxide and nitrogen are smaller than that for carbon dioxide but larger than that for hydrogen. Accordingly, in the initial period of the adsorption step, some amounts of carbon monoxide and nitrogen are also adsorbed and thus the hydrogen concentration in the unadsorbed gas discharged outside the tower in the initial stage of the adsorption step is substantially high. Fig. 11 is a graph showing the changes in hydrogen concentration in the unadsorbed gas with time in the adsorption step. The hydrogen concentration in the unadsorbed gas decreases with the passage of time and starts to sharply decrease at some point of time. This is probably due to the fact that as the adsorption step proceeds, carbon monoxide and nitrogen that have low adsorbability compared to carbon dioxide are no longer adsorbed onto the adsorbent but discharged as an unadsorbed gas to outside of the tower so that the hydrogen whose concentration in the original blast furnace gas is low (2 to 6%) is diluted with nitrogen (52 to 60%) and carbon monoxide (21 to 27%) whose concentrations in the blast furnace gas are high.

In the third embodiment, from the start of the adsorption step up to some point during the adsorption step, the unadsorbed gas from the adsorption tower A is recovered as a hydrogen concentrated gas through the automatic valve k, the unadsorbed gas pipe 202, the switch valve 210, the hydrogen recovery pipe 203, and the filter 212. The recovery of the hydrogen concentrated gas ends when the hydrogen concentration in the unadsorbed gas detected with the hydrogen concentration sensor 211 decreased to a particular concentration. Subsequently, the switch valve 210 is switched so that the unadsorbed gas from the adsorption tower A is retrieved through the unadsorbed gas outlet pipe 204.

The hydrogen concentration set to indicate the end of the recovery of the hydrogen concentrated gas (hydrogen concentration of gas detected with the hydrogen concentration sensor 211) is for example, in the range of 5 to 90%, preferably 10 to 30%, and more preferably 15 to 25%. In order to increase the recovery ratio of hydrogen, the hydrogen concentration at which recovery of the hydrogen concentrated gas is ended is set to a low level, and in order to increase the concentration ratio of hydrogen, the hydrogen concentration at which the recovery ends is set to a high level. When the hydrogen concentration at which the recovery is ended is set to, for example, 10% to increase the recovery ratio of hydrogen, the hydrogen gas concentration in the entire hydrogen concentrated gas recovered is about 30%. Since the hydrogen concentration in the original blast furnace gas is 2 to 6%, the hydrogen concentration has increased fivefold or more.

The hydrogen recovery ratio in this case is about 80%. In this embodiment, the gas flowing in the hydrogen recovery pipe 203 is passed through the filter 212 to efficiently remove carbon monoxide and nitrogen. This structure is preferable to increase the concentration ratio of the recovered hydrogen concentrated gas. However, the filter 212 may not be provided if the concentration ratio of the hydrogen concentrated gas does not have to be so high.

Since the adsorption step is performed in advance in the adsorption tower B (refer to step 6 described below shown in Fig. 9F), the pressure in the tower is already high and a gas mainly composed of poorly adsorbable components, i.e., hydrogen, nitrogen, and carbon monoxide, or a gas having nearly the same composition as the blast furnace gas remains in the space in the tower. A desorbed gas discharged from the adsorption tower C (containing mildly concentrated carbon dioxide) is introduced into the adsorption tower B through the automatic valve i, the desorbed gas pipe 205, the switch valve 213, the compressor 214, the washing pipe 207, and the automatic valve e. The remaining gas in the adsorption tower B is discharged outside the tower and retrieved outside the system through the blast furnace gas pipe 201 and the purge gas outlet pipe 208. As a result, the space in the adsorption tower B is filled with the desorbed gas from the adsorption tower C.

In step 2, an adsorption step is conducted in the adsorption tower A, a desorption step is conducted in the adsorption tower B, and a desorption step is conducted in the adsorption tower C. The state of gas flow is shown in Fig. 9B.

As shown in Fig. 8 and Fig. 9B, as in step 1, a blast furnace gas is introduced into the adsorption tower A and an unadsorbed gas is discharged outside the tower. The adsorption step is conducted until the breakdown of the adsorbent in the tower. The unadsorbed gas is retrieved through the automatic valve k, the unadsorbed gas pipe 202, the switch valve 210, and the unadsorbed gas outlet pipe 204.

In the adsorption tower B, the automatic valve 201 is opened to reduce the pressure in the tower to atmospheric pressure and then the adsorbed gas starts to desorb from the adsorbent. Here, the gas in the initial period of desorption contains relatively large amounts of carbon monoxide and nitrogen which are less absorptive than carbon dioxide and thus discharged outside the tower along with the gas in the space in the tower. The exhaust gas from the adsorption tower B is retrieved outside the system through the automatic valve 201 and the purge gas outlet pipe 208.

In the adsorption tower C, a desorption step is continued following step 1. Here, the gas desorbed from the adsorbent in the tower has a high carbon dioxide concentration. The desorbed gas discharged from the adsorption tower C is recovered through the automatic valve i, the desorbed gas pipe 205, the switch valve 213, and the desorbed gas recovery pipe 206. The recovered desorbed gas has, for example, a carbon dioxide concentration of 85 to 95%, and the carbon dioxide recovery ratio is 80 to 90%.

In steps 3 and 4, as shown in Figs. 9C and 9D, the washing step and the desorption step are conducted in the adsorption tower A as in the adsorption tower B in steps 1 and 2, a desorption step is performed in the adsorption tower B as in the adsorption tower C in steps 1 and 2, and an adsorption step is conducted in the adsorption tower C as in the adsorption tower A in steps 1 and 2.

In steps 5 and 6, as shown in Figs. 9E and 9F, a desorption step is conducted in the adsorption tower A as in the adsorption tower C in steps 1 and 2, an adsorption step is performed in the adsorption tower B as in the adsorption tower A in steps 1 and 2, and a washing step and a desorption step are conducted in the adsorption tower C as in the adsorption tower B in steps 1 and 2.

Then steps 1 to 6 described above are repeated in the blast furnace gas separator X1 to separate and recover a desorbed gas containing a high concentration of carbon dioxide and an unadsorbed gas in which hydrogen is concentrated from a blast furnace gas.

Although the third embodiment has been described as above, the third embodiment is not limited to this and various modifications are possible without departing from the spirit of the invention. For example, in the washing step described above, at the same time as using, as a washing gas, only part of the desorbed gas discharged from another adsorption tower, the remaining desorbed gas may be recovered through the desorbed gas recovery pipe 206. Moreover, in the third embodiment, in the adsorption step, the gas flow is arranged to switch between the hydrogen recovery pipe 203 and the unadsorbed gas outlet pipe 204 in accordance with the hydrogen concentration; however, the point of time at which the flow of gas is switched may be set to a point of time at which a particular fraction of the amount of the time taken for the adsorption step has elapsed. In such a case, for example, setting may be made in advance so that the recovery of gas through the hydrogen recovery pipe 203 is to be ended when 20 to 30% of the amount of time taken for the adsorption step has elapsed on the basis of the relationship between the hydrogen concentration curve shown in Fig. 11 and the hydrogen concentration of the target hydrogen concentrated gas. Then the hydrogen concentration sensor 211 is no longer necessary.

In the third embodiment, the pressure in the adsorption tower in the desorption step is set to atmospheric pressure. Alternatively, the pressure in the tower during the desorption step may be reduced to less than atmospheric pressure. When the pressure in the tower is reduced during the desorption step, the amount of the desorbed gas increases and regeneration of the adsorbent to be used in the next adsorption step can be accelerated, thereby improving the overall performance of separating the blast furnace gas by the PSA technique. In such a case, for example, a vacuum pump may be provided to the desorption gas pipe and delivery of the desorbed gas to the adsorption tower in the washing step can be conducted by utilizing the discharge pressure of the vacuum pump.

The number of adsorption towers in the blast furnace gas separators is not limited to three indicated in the embodiment described above and may be 2 or 4 or more. When two towers are provided, for example, the washing step may be omitted from the PSA operation.

According to the blast furnace gas separation method using the blast furnace gas separator X1, it becomes possible to recover, through the hydrogen recovery pipe 203, only a gas having a relatively high hydrogen concentration discharged from the start of the adsorption step up to some point during the adsorption step from the unadsorbed gas discharged from the adsorption tower carrying out the adsorption step. Thus, according to this separation method, hydrogen concentrated to a particular level or higher can be recovered while recovering carbon dioxide at a relatively high concentration and high recovery ratio by one stage of the PSA operation. The hydrogen concentrated gas having a concentration of about 30% described as an example in the embodiment above has a relatively high heating value and can be effectively utilized as a fuel.

### Examples (Reference)

The usefulness of the third embodiment will now be described by using examples.

### Example 1

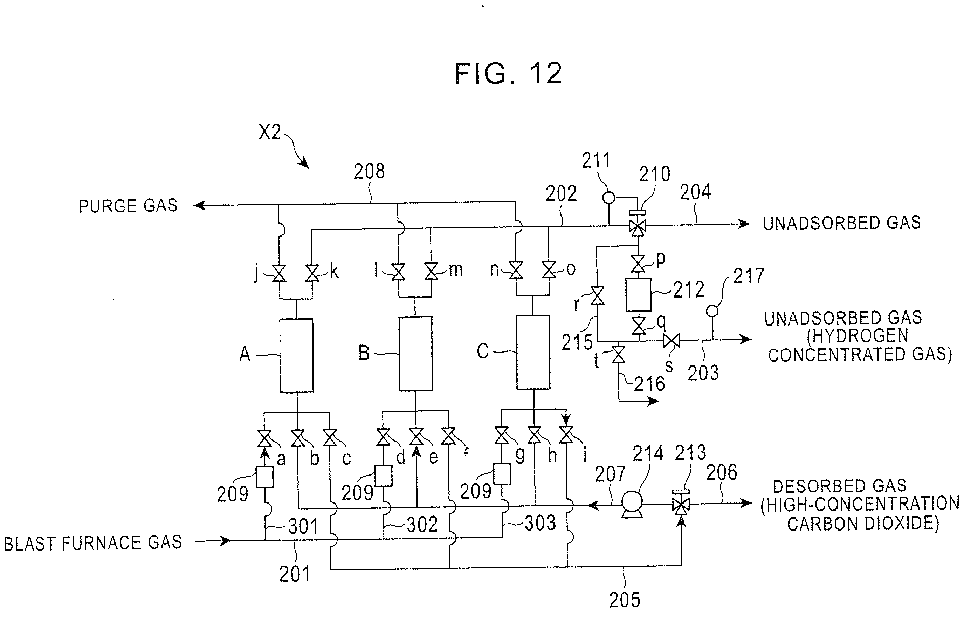

In this example, a blast furnace gas separator X2 shown in Fig. 12 was used and an attempt was made to separate a blast furnace gas by repeating a cycle of the steps shown in Fig. 9 under the conditions described below. Compared to the blast furnace gas separator X1 shown in Fig. 8, the blast furnace gas separator X2 additionally includes a bypass pipe 215 branched from the hydrogen recovery pipe 203 and connected at the upstream and the downstream of the filter 212, a pipe 216 branching from the bypass pipe 215, a hydrogen concentration sensor 217 provided in the hydrogen recovery pipe 203 downstream of the filter 212, and valves p to t.

The adsorption towers A, B, and C were cylindrical containers and 2 L of an activated carbon adsorbent was charged inside the adsorption towers A, B, and C each. A blast furnace gas containing, on a volume concentration basis, 22% carbon dioxide, 52% nitrogen, 3% hydrogen, and 23% carbon monoxide was used as the blast furnace gas. The amount of the blast furnace gas fed was 1500 L/hr (on a standard condition basis). The maximum pressure inside the adsorption towers A, B, and C in the adsorption step was 300 kPa (gauge pressure) and the minimum pressure in the desorption step was -90 kPa (gauge pressure). A zeolite-based adsorbent in an amount of 0.2 L was charged in the filter 212 attached to the hydrogen recovery pipe 203.

In this example, the hydrogen concentrated gas introduced into the hydrogen recovery pipe 203 through the switch valve 210 was recovered through the bypass pipe 215 without passing the filter 212 by closing the valves p, q, and t. As a result, when the hydrogen concentration in the unadsorbed gas discharged from the adsorption towers A, B, and C in the adsorption step was checked with the hydrogen concentration sensor 211, a high concentration of 92% was retained in the initial period of the adsorption step as shown in Fig. 9 but the concentration sharply decreased after passage of 20 seconds. Accordingly, the recovery of hydrogen through the hydrogen recovery pipe 203 was ended at the point of time when the hydrogen concentration decreased to about 20%, which is 25 seconds of adsorption time. Moreover, the adsorption step was ended when the hydrogen gas concentration ultimately became substantially equal to the blast furnace gas concentration, i.e., after 50 seconds from the start of the adsorption step. The hydrogen recovery ratio under these conditions was about 50% and the hydrogen concentration in the entire hydrogen concentrated gas recovered was about 65%. As for the desorbed gas (high-concentration carbon dioxide gas) recovered during the desorption step, the carbon dioxide concentration reached about 98% and the recovery ratio reached 90%.

### Example 2

In this example, the hydrogen concentrated gas introduced into the hydrogen recovery pipe 203 through the switch valve 210 was recovered through the filter 212 without passing the bypass pipe 215 by closing the valves r and t. All other conditions were the same as in Example 1. As a result, the fluctuation of hydrogen concentration checked with the hydrogen concentration sensor 211 was the same as in Example 1 but the hydrogen concentration of the gas passed through the filter 212 detected with the hydrogen concentration sensor 217 started to decrease from 92% observed 25 seconds after the start of the adsorption step. The concentration decline curve thereafter was the same as that in Example 1.

Thus, recovery of gas from the hydrogen recovery pipe 203 was ended after 30 seconds from the start of the adsorption step at which the hydrogen concentration dropped to about 20%. Along with ending the recovery of the hydrogen concentrated gas, the valve s downstream of the filter 212 was closed and the valve t was opened to decrease the pressure in the filter 212 to atmospheric pressure so as to desorb impurities adsorbed onto the adsorbent in the filter 212.

This desorption operation was carried out until immediately before performance of the next adsorption step. The filter 212 can be regenerated by this desorption operation. The hydrogen recovery ratio under these conditions was about 53% and the hydrogen concentration in the entire hydrogen concentrated gas recovered improved to about 69%.

## Claims

1. A method for separating a blast furnace gas containing carbon dioxide, nitrogen, hydrogen, and carbon monoxide, comprising:
a first pressure swing adsorption gas separation step for repeating a cycle including a first adsorption step and a first desorption step, based on a pressure swing adsorption gas separation method that uses a first adsorption tower filled with a first adsorbent that preferentially adsorbs carbon dioxide,
the first adsorption step comprising: introducing a blast furnace gas to the first adsorption tower to allow carbon dioxide in the blast furnace gas to absorb onto the first adsorbent, and discharging a first unadsorbed gas from the adsorption tower,
the first desorption step comprising: allowing carbon dioxide to desorb from the first adsorbent and discharging a desorbed gas to outside the tower,
a second pressure swing adsorption gas separation step for repeating a cycle including a second adsorption step and a second desorption step, based on a pressure swing adsorption gas separation method that uses a second adsorption tower filled with a second adsorbent that preferentially adsorbs carbon monoxide,
the second adsorption step comprising: introducing the first unadsorbed gas into the second adsorption tower to allow carbon monoxide in the first unadsorbed gas to adsorb onto the second adsorbent, and discharging a second unadsorbed gas from the adsorption tower,
the second desorption step comprising: allowing carbon monoxide to desorb from the second adsorbent and discharging a desorbed gas to outside the tower,
wherein a gas discharged from the start of the first adsorption step up to a particular point of time is recovered through a hydrogen recovery pipe from the first unadsorbed gas discharged from the first adsorption tower in the first adsorption step.

2. An apparatus for separating a blast furnace gas containing carbon dioxide, nitrogen, hydrogen, and carbon monoxide, comprising:
a first pressure swing adsorption gas separation apparatus that uses a pressure swing adsorption gas separation method of using a first adsorption tower filled with a first adsorbent for preferentially adsorbing carbon dioxide, the apparatus being configured to introduce the blast furnace gas into the first adsorption tower, discharge a first unadsorbed gas from the adsorption tower while allowing carbon dioxide in the blast furnace gas to adsorb onto the first adsorbent, desorb carbon dioxide from the first adsorbent, and discharge a desorbed gas to outside the tower, wherein the first pressure swing adsorption gas separation apparatus is connected to a hydrogen recovery pipe which is for recovering part of the first unadsorbed gas discharged from the adsorption tower; and
a second pressure swing adsorption gas separation apparatus that uses a pressure swing adsorption gas separation method of using a second adsorption tower filled with a second adsorbent for preferentially adsorbing carbon monoxide, the apparatus being configured to introduce the first unadsorbed gas into the second adsorption tower, discharge a second unadsorbed gas from the adsorption tower while allowing carbon monoxide in the first unadsorbed gas to adsorb onto the second adsorbent, desorb carbon monoxide from the second adsorbent, and discharge a desorbed gas to outside the tower.

## Patentansprüche

1. Verfahren zum Trennen eines Hochofengases, das Kohlendioxid, Stickstoff, Wasserstoff und Kohlenmonoxid enthält, aufweisend:
einen ersten Druckwechseladsorptionsgastrennungsschritt zum Wiederholen eines Zyklus, der einen ersten Adsorptionsschritt und einen ersten Desorptionsschritt enthält, basierend auf einem Druckwechseladsorptionsgastrennungsverfahren, das einen ersten Adsorptionsturm verwendet, der mit einem ersten Adsorptionsmittel gefüllt ist, das vorzugsweise Kohlendioxid adsorbiert, wobei
der erste Adsorptionsschritt aufweist: Zuführen eines Hochofengases zu dem ersten Adsorptionsturm, um zu gestatten, dass Kohlendioxid im Hochofengas auf dem ersten Adsorptionsmittel adsorbieren kann und Abführen eines ersten nicht adsorbierten Gases aus dem Adsorptionsturm,
der erste Desorptionsschritt aufweist: Gestatten, dass Kohlendioxid von dem ersten Adsorptionsmittel desorbiert und Abführen eines desorbierten Gases aus dem Adsorptionsturm,
einen zweiten Druckwechseladsorptionsgastrennungsschritt zum Wiederholen eines Zyklus mit einem zweiten Adsorptionsschritt und einem zweiten Desorptionsschritt, basierend auf einem Druckwechseladsorptionsgastrennungsverfahren, das einen zweiten Adsorptionsturm verwendet, der mit einem zweiten Adsorptionsmittel gefüllt ist, das bevorzugt Kohlenmonoxid adsorbiert, wobei
der zweite Adsorptionsschritt aufweist: Zuführen des ersten nicht adsorbierten Gases in den zweiten Adsorptionsturm, um zu gestatten, dass Kohlenmonoxid in dem ersten nicht adsorbierten Gas auf dem zweiten Adsorptionsmittel adsorbieren kann und Abführen eines zweiten nicht adsorbierten Gases aus dem Adsorptionsturm,
der zweite Desorptionsschritt aufweist: Gestatten, dass Kohlenmonoxid von dem zweiten Adsorptionsmittel desorbiert und Abführen eines desorbierten Gases aus dem Turm, wobei
ein vom Beginn des ersten Adsorptionsschritts bis zu einem bestimmten Zeitpunkt abgeführtes Gas durch ein Wasserstoffrückgewinnungsleitung aus dem ersten nicht adsorbierten Gas, das aus dem ersten Adsorptionsturm in dem ersten Adsorptionsschritt abgeführt wird, zurückgewonnen wird.

2. Vorrichtung zum Trennen eines Hochofengases, das Kohlendioxid, Stickstoff, Wasserstoff und Kohlenmonoxid enthält, aufweisend:
eine erste Druckwechseladsorptionsgastrennungsvorrichtung, die ein Druckwechseladsorptionsgastrennungsverfahren unter Verwendung eines ersten Adsorptionsturms verwendet, der mit einem ersten Adsorptionsmittel zum bevorzugten Adsorbieren von Kohlendioxid gefüllt ist, wobei die Vorrichtung so ausgestaltet ist, dass das Hochofengas in den ersten Adsorptionsturm zugeführt wird, ein erstes nicht adsorbiertes Gas aus dem Adsorptionsturm abgeführt wird, während es Kohlendioxid im Hochofengas gestattet wird, auf dem ersten Adsorptionsmittel zu adsorbieren, Kohlendioxid von dem ersten Adsorptionsmittel desorbiert wird, und ein desorbiertes Gas aus dem Turm abgeführt wird, wobei die erste Druckwechseladsorptionsgastrennungsvorrichtung mit einer Wasserstoffrückgewinnungsleitung verbunden ist, die für die Rückgewinnung eines Teils des ersten nicht absorbierten Gases, das aus dem Adsorptionsturm abgeführt wird, vorgesehen ist, und
eine zweite Druckwechseladsorptionsgastrennungsvorrichtung, die ein Druckwechseladsorptionsgastrennungsverfahren unter Verwendung eines zweiten Adsorptionsturms verwendet, der mit einem zweiten Adsorptionsmittel zum bevorzugten Adsorbieren von Kohlenmonoxid gefüllt ist, wobei die Vorrichtung so ausgestaltet ist, dass das erste nicht adsorbierte Gas in den zweiten Adsorptionsturm zugeführt wird, ein zweites nicht adsorbiertes Gas aus dem Adsorptionsturm abgeführt wird, während es Kohlenmonoxid in dem ersten nicht adsorbierten Gas gestattet wird, auf dem zweiten Adsorptionsmittel zu adsorbieren, Kohlenmonoxid aus dem ersten Adsorptionsmittel desorbiert wird, und ein desorbiertes Gas aus dem Turm abgeführt wird.

## Revendications

1. Procédé pour séparer un gaz de haut-fourneau contenant du dioxyde de carbone, de l'azote, de l'hydrogène et du monoxyde de carbone, comprenant :
une première étape de séparation de gaz par adsorption modulée en pression pour répéter un cycle incluant une première étape d'adsorption et une première étape de désorption, sur la base d'un procédé de séparation de gaz par adsorption modulée en pression qui utilise une première tour d'adsorption remplie d'un premier adsorbant qui adsorbe de préférence le dioxyde de carbone,
la première étape d'adsorption comprenant : l'introduction d'un gaz de haut-fourneau dans la première tour d'adsorption pour permettre l'absorption de dioxyde de carbone contenu dans le gaz de haut-fourneau sur le premier adsorbant, et l'évacuation d'un premier gaz non adsorbé de la tour d'adsorption,
la première étape de désorption comprenant : le fait de permettre la désorption de dioxyde de carbone du premier adsorbant et l'évacuation d'un gaz désorbé à l'extérieur de la tour,
une deuxième étape de séparation de gaz par adsorption modulée en pression pour répéter un cycle incluant une deuxième étape d'adsorption et une deuxième étape de désorption, sur la base d'un procédé de séparation de gaz par adsorption modulée en pression qui utilise une deuxième tour d'adsorption remplie d'un deuxième adsorbant qui adsorbe de préférence le monoxyde de carbone,
la deuxième étape d'adsorption comprenant : l'introduction du premier gaz non adsorbé dans la deuxième tour d'adsorption pour permettre l'adsorption de monoxyde de carbone contenu dans le premier gaz non adsorbé sur le deuxième adsorbant, et l'évacuation d'un deuxième gaz non adsorbé de la tour d'adsorption,
la deuxième étape de désorption comprenant : le fait de permettre la désorption du monoxyde de carbone du deuxième adsorbant et l'évacuation d'un gaz désorbé à l'extérieur de la tour,
dans lequel un gaz évacué du début de la première étape d'adsorption jusqu'à un moment particulier est récupéré par le biais d'un conduit de récupération d'hydrogène à partir du premier gaz non adsorbé évacué de la première tour d'adsorption à la première étape d'adsorption.

2. Appareil pour séparer un gaz de haut-fourneau contenant du dioxyde de carbone, de l'azote, de l'hydrogène et du monoxyde de carbone, comprenant :
un premier appareil de séparation de gaz par adsorption modulée en pression qui utilise un procédé de séparation de gaz par adsorption modulée en pression consistant à utiliser une première tour d'adsorption remplie d'un premier adsorbant pour adsorber de préférence le dioxyde de carbone, l'appareil étant configuré pour introduire le gaz de haut-fourneau dans la première tour d'adsorption, évacuer un premier gaz non adsorbé de la tour d'adsorption tout en permettant l'adsorption de dioxyde de carbone contenu dans le gaz de haut-fourneau sur le premier adsorbant, désorber le dioxyde de carbone du premier adsorbant, et évacuer un gaz désorbé à l'extérieur de la tour, dans lequel le premier appareil de séparation de gaz par adsorption modulée en pression est relié à un conduit de récupération d'hydrogène qui sert à récupérer une partie du premier gaz non adsorbé évacué de la tour d'adsorption ; et
un deuxième appareil de séparation de gaz par adsorption modulée en pression qui utilise un procédé de séparation de gaz par adsorption modulée en pression consistant à utiliser une deuxième tour d'adsorption remplie d'un deuxième adsorbant pour adsorber de préférence le monoxyde de carbone, l'appareil étant configuré pour introduire le premier gaz non adsorbé dans la deuxième tour d'adsorption, évacuer un deuxième gaz non adsorbé de la tour d'adsorption tout en permettant l'adsorption de monoxyde de carbone contenu dans le premier gaz non adsorbé sur le deuxième adsorbant, désorber le monoxyde de carbone du deuxième adsorbant, et évacuer un gaz désorbé à l'extérieur de la tour.
